(19) **Europäisches Patentamt**
**European Patent Office**
**Office européen des brevets**

(11) **EP 2 686 768 B1**

(12) **FASCICULE DE BREVET EUROPEEN**

(45) Date de publication et mention
de la délivrance du brevet:
**19.09.2018 Bulletin 2018/38**

(51) Int Cl.:
*G06F 11/07* (2006.01)          *B61L 29/00* (2006.01)
*G06F 11/28* (2006.01)

(21) Numéro de dépôt: **11725024.1**

(22) Date de dépôt: **30.05.2011**

(86) Numéro de dépôt international:
**PCT/EP2011/058840**

(87) Numéro de publication internationale:
**WO 2012/123037 (20.09.2012 Gazette 2012/38)**

(54) **DISPOSITIF ET MÉTHODE DE FILTRAGE DE MAINTIEN SUR UN FLUX D'ENTRÉES/SORTIES CODÉ**

FILTERUNGSVORRICHTUNG UND VERFAHREN ZUR AUFRECHTERHALTUNG EINER KODIERTEN EINGANGS-/AUSGANGSSTROMS

FILTERING DEVICE AND METHOD FOR MAINTAINING A CODED INPUT/OUTPUT STREAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.03.2011 EP 11290135**

(43) Date de publication de la demande:
**22.01.2014 Bulletin 2014/04**

(73) Titulaire: **Siemens S.A.S.**
**93527 Saint-Denis Cedex (FR)**

(72) Inventeur: **CHENU, Eric**
**92370 Chaville (FR)**

(74) Mandataire: **Maier, Daniel Oliver et al**
**Siemens AG**
**Postfach 22 16 34**
**80506 München (DE)**

(56) Documents cités:
**GB-A- 2 188 456          US-A- 4 556 976**
**US-A- 4 823 307          US-A- 5 125 090**

**Description**

La présente invention concerne une méthode et un dispositif de filtrage de maintien sur un flux d'Entrées/Sorties codé, selon les préambules des revendications 1 et 9.

En particulier, l'invention se rapporte aux systèmes informatiques sécurisés trouvant leurs applications dans le domaine des véhicules guidés, notamment dans le domaine ferroviaire, où une sécurisation des calculateurs associés à des automatismes sol et/ou bord doit être garantie afin de détecter tout défaut susceptible de porter atteinte à la sécurité du véhicule guidé. La présente invention se rapporte plus particulièrement à un dispositif et une méthode de calcul d'une somme de contrôle destinée à sécuriser un message sortant généré à partir d'un message entrant dont une Entrée/Sortie est soit destinée à être maintenue, soit destinée à ne pas être maintenue.

Par « véhicule guidé », il est fait référence aux moyens de transport en commun tels que des bus, trolleybus, tramways, métros, trains ou unités de train, etc., et aux moyens de transport de charge tel que, par exemple, les ponts roulants, pour lesquels l'aspect sécuritaire est très important et pour lesquels le guidage est assuré par au moins un rail qui définit au moins une ligne ou voie de transport, i.e. au moins un trajet pour ledit moyen de transport.

De nombreux automatismes liés au fonctionnement des véhicules guidés, comme par exemple une ouverture de porte ou l'abaissement d'une barrière de sécurité, sont réalisés en logiciel. Comme ces automatismes peuvent influer sur la sécurité du véhicule, il est nécessaire de pouvoir garantir en sécurité leur exécution, et donc, de contrôler l'exécution des logiciels qui servent à leur mise en oeuvre.

Une technique de sécurisation d'un logiciel ou d'une application connue de l'homme du métier est basée sur une utilisation d'un processeur sécuritaire codé (PSC), notamment tel que développé par la Demanderesse sous la marque DIGISAFE. Le principe de base du processeur sécuritaire codé est d'associer à chaque information numérique entrante destinée à être traitée par une application, un code qui sera traité et transmis avec ladite information numérique entrante lors de l'exécution de ladite application, de sorte que l'information numérique sortante résultant dudit traitement de l'information numérique entrante soit elle-même codée. La corrélation du codage de l'information numérique entrante et du codage de l'information numérique sortante étant connu en fonction de ladite application, une analyse du codage de l'information numérique sortante permet de déterminer si l'application s'est exécutée correctement. Ce principe de base a été utilisé afin de garantir en sécurité de nombreux automatismes, le niveau de sécurité pouvant être choisi en fonction de la taille du code. Le codage d'information entrante ou sortante dans le but de vérifier le bon fonctionnement d'un système est également décrit dans les documents US 5,125,090 et GB 2 188 456 A.

Le processeur sécuritaire codé est de plus aussi utilisé actuellement pour le maintien en sécurité d'une information numérique entrante et/ou sortante codée, ou autrement dit, pour le maintien d'une Entrée et/ou d'une Sortie codée, à une valeur prédéfinie. Considérons par exemple une barrière optique qui, lorsqu'elle est coupée par un train, envoie un signal amorçant un abaissement de barrières de sécurité. Le signal envoyé par ladite barrière optique comprend deux états: un premier état indiquant une absence de train, correspondant à des barrières de sécurité relevées et à une valeur 0 dudit signal, et un second état indiquant une présence de train, correspondant à des barrières de sécurité abaissées et à une valeur 1 dudit signal. Pour des raisons de sécurité, il est nécessaire que les barrières de sécurité soient par exemple maintenues abaissées même si l'ensemble du train a déjà franchi la barrière optique. En d'autres termes, la valeur 1 dudit signal correspondant à la présence de train doit être non seulement codée, mais maintenue durant une certaine période de temps sécuritaire. Ce maintien, durant une certaine période de temps, d'une Entrée, respectivement d'une Sortie, à une valeur initiale est actuellement réalisé par des calculateurs sécuritaires du type DIGISAFE, i.e. par un processeur sécuritaire codé exécutant des algorithmes logiciels de traitement desdites Entrées/Sorties.

Généralement, les Entrées/Sorties qui doivent être prises en compte par le processeur sécuritaire codé sont reçues sous forme de messages entrant successifs pouvant être successivement indicés, chaque message entrant comprenant:

- un ensemble de n Entrées/Sorties $es_i$ (i = 1,...,n), chacune caractérisée par un état binaire pouvant être par exemple permissif (lorsque ladite Entrée/Sortie est par exemple égale à 1) ou restrictif (lorsque ladite Entrée/Sortie est égale à 0);
- une somme de contrôle $\sum Ses_i$ constituée de la somme arithmétique d'un code de contrôle ou signature $Ses_i$ prédéterminable associé à l'état de chaque Entrée/Sortie;
- et une date servant à dater la somme de contrôle.

Le $j^{\text{ème}}$ message entrant peut dès lors s'écrire sous la forme suivante:

$$[\{es_i\} \ , \ (\textstyle\sum Ses_i) + Date]_j$$

A partir de chaque message entrant, le processeur sécuritaire codé génère un message sortant tel que le $j^{ème}$ message sortant, généré à partir du $j^{ème}$ message entrant, comprend:

- un ensemble de n Entrées/Sorties **esm$_i$**, caractérisées chacune par ledit état binaire, chaque Entrée/Sortie **esm$_i$** étant calculée à partir de l'Entrée/Sortie **es$_i$** en fonction d'un éventuel maintien de l'état de ladite Entrée/Sortie **es$_i$** durant une période Ti;
- une somme de contrôle $\sum$**Sesm$_i$** constituée de la somme arithmétique d'un code de contrôle ou signature **Sesm$_i$** déterminée par ledit processeur sécuritaire codé en fonction des signatures **Ses$_i$** des Entrées/Sorties du $j^{ème}$ message entrant et d'un éventuel maintien d'une des Entrées/Sorties **es$_i$** du $j^{ème}$ message entrant;
- et ladite date.

Ladite date est une date qui s'incrémente d'une valeur constante à chaque message entrant et permet dès lors de vérifier que le $j^{ème}$ message sortant et le $(j-1)^{ème}$ message sortant sont le résultat du traitement de deux messages entrants consécutifs. D'autre part, la période de maintien $T_i$ d'une Entrée/Sortie **es$_i$** d'un message entrant représente un temps de maintien de ladite Entrée/Sortie **es$_i$** à un de ses états durant un nombre prédéfini de messages successifs.
Le $j^{ème}$ message sortant peut dès lors s'écrire sous la forme suivante:

$$[\{esm_i\}\ ,\ (\sum Sesm_i)\ +\ (Date)]_j$$

Malheureusement, chaque processeur sécuritaire codé comprend d'une part de nombreux composants électroniques couteux, mais aussi d'autre part, requiert une ingénierie logicielle poussée qui n'est pas économiquement avantageuse.
Un but de la présente invention est de proposer une méthode et un dispositif de filtrage de maintien à un état binaire d'une ou plusieurs Entrées/Sorties libres de toute utilisation et de toute exécution d'un logiciel sécuritaire, permettant ainsi une diminution des coûts liés audit maintien de ladite Entrée/Sortie à une valeur initiale.
Dans ce but, un dispositif et une méthode sont proposés par le contenu des revendications 1 et 9.
Un ensemble de sous-revendications présente également des avantages de l'invention.
A partir d'une méthode de filtrage de maintien sur un flux de m messages entrants **Es$_j$** successifs, destinés en particulier à être reçus en entrée d'un dispositif de filtrage de maintien destiné à les traiter afin de générer en sortie à partir de chaque message entrant **Es$_j$** un message sortant **Esm$_j$**, l'indice j servant à indicer les messages entrants successifs, chaque message entrant **Es$_j$** comprenant:

a. un ensemble de n Entrées/Sorties **es$_{i,j}$** (i = 1,...,n), n étant un entier positif, chacune caractérisable par $s_i$ états $P_{q,i}$, q allant de 1 à $s_i$, $s_i$ étant un entier positif notamment supérieur ou égal à 2, à chaque état $P_{q,i}$ d'une Entrée/Sortie **es$_{i,j}$** étant associé une valeur $v_{q,i}$ à laquelle est égale ladite Entrée/Sortie **es$_{i,j}$** lorsqu'elle est dans ledit état $P_{q,i}$, chaque état $P_{q,i}$ pouvant être un état destiné à être maintenu (noté dès lors $P_{q,i}(h)$) (en particulier durant une période temporelle $T_i$) ou un état destiné à ne pas être maintenu, noté $P_{q,i}(f)$. Seront notés en particulier dans la suite du document $P_{q,i,j}$ le ou les états et $v_{q,i,j}$ la ou les valeurs effectives de l'Entrée/Sortie **es$_{i,j}$** au $j^{ème}$ message entrant. En particulier, si chaque message entrant est identique, chacun desdits messages entrant comprend dès lors un même nombre d'Entrées/Sorties et le nombre d'états susceptibles de caractériser une même Entrée/Sortie dans chacun des messages entrants est un invariant, i.e. **es$_{i,j}$** $\in$ {**es$_i$**} $\forall$j, $P_{q,i,j}$ $\in$ {$P_{q,i}$} $\forall$j et $v_{q,i,j}$ $\in$ {$v_{q,i}$} $\forall$j.
b. une somme de contrôle $\sum$**ses$_{i,j}$** de signatures **Ses$_{i,j}$**, notamment constituée d'une somme arithmétique desdites signatures **Ses$_{i,j}$** pré-déterminables, chaque signature **Ses$_{i,j}$** étant en particulier calculée en fonction de l'état de l'Entrée/Sortie **es$_{i,j}$** à laquelle elle est associée et étant destinée à coder ladite Entrée/Sortie **es$_{i,j}$**;
c. et une date $d_j$ destinée à dater la somme de contrôle, ladite date étant incrémentée par un incrément de date pour chaque message entrant,
ladite méthode de filtrage de maintien permettant une génération à partir de chaque message entrant **Es$_j$** d'un message sortant **Esm$_j$**, tel que le $j^{ème}$ message sortant **Esm$_j$** généré à partir du $j^{ème}$ message entrant **Es$_j$** comprend:
d. un ensemble de n Entrées/Sorties **esm$_{i,j}$**, chacune caractérisable par lesdits $s_i$ états $P_{q,i,j}$, à chaque état $P_{q,i,j}$ d'une Entrée/Sortie **esm$_{i,j}$** étant associée ladite valeur $v_{q,i,j}$ à laquelle est égale ladite Entrée/Sortie **esm$_{i,j}$** lorsqu'elle est dans ledit état $P_{q,i,j}$, la valeur $v_{q,i,j}$ de l'Entrée/Sortie **esm$_{i,j}$** du message sortant **Esm$_j$** pouvant être égale ou différente de la valeur $v_{q,i,j}$ de l'Entrée/Sortie **es$_{i,j}$** du message entrant **Es$_j$** en fonction d'un éventuel maintien de l'état $P_{q,i}$ de l'Entrée/Sortie **es$_{i,j}$**, ou autrement dit un éventuel maintien de ladite valeur $v_{q,i}$ de ladite Entrée/Sortie **es$_{i,j}$**, par exemple durant une période $T_i$ exprimable en nombre de messages successifs, débutant avec la génération d'un $t^{ème}$ message sortant **Esm$_t$**, t < j, et préférentiellement, susceptible d'être prolongée à partir du $j^{ème}$ message entrant par une nouvelle période supérieure ou égale à ladite période $T_i$ débutant avec la réception d'un $g^{ème}$

message entrant caractérisé par $t < g \leq j$ pour lequel l'Entrée/Sortie $\mathbf{es_{i,g}}$ est destinée à être maintenue. En particulier la valeur $v_{q,i,j}$ de l'Entrée/Sortie $\mathbf{esm_{i,j}}$ du $(j)^{ème}$ message sortant est égale à la valeur $v_{q,i,t}$ de l'Entrée/Sortie $\mathbf{esm_{i,t}}$ du $t^{ème}$ message sortant quel que soit l'état $P_{q,i,j}$ de l'Entrée/Sortie $\mathbf{es_{i,j}}$ du $(j)^{ème}$ message entrant si et seulement si il existe un $t^{ème}$ message entrant $j-T_i \leq t < j$ tel que:

- l'état $P_{q,i,t}$ de l'Entrée/Sortie $\mathbf{es_{i,t}}$ du $t^{ème}$ message entrant $\mathbf{Es_t}$ est un état destiné à être maintenu durant une période $T_i$,
- et optionnellement l'Entrée/Sortie $\mathbf{es_{i,t}}$ du $t^{ème}$ message entrant $\mathbf{Es_t}$ n'est pas en cours de maintien, i.e. une période $T_i$ de maintien de ladite Entrée/Sortie $\mathbf{es_i}$ s'est achevée pour un $r^{ème}$ message sortant, $r < t$, et l'état de l'Entrée/Sortie $\mathbf{es_i}$ de chaque message entrant compris entre le $r^{ème}$ message entrant et le $t^{ème}$ message entrant n'était pas destiné à être maintenu.

e. une somme de contrôle $\sum\mathbf{sesm_{i,j}}$ de signatures $\mathbf{Sesm_{i,j}}$, notamment constituée de la somme arithmétique des signatures $\mathbf{Sesm_{i,j}}$, chaque signature $\mathbf{Sesm_{i,j}}$ étant destinée à coder l'Entrée/Sortie $\mathbf{esm_{i,j}}$ en fonction de l'état de l'Entrée/Sortie $\mathbf{es_{i,j}}$;
f. et ladite date $d_j$;

la méthode de filtrage de maintien selon l'invention est caractérisée en ce que qu'elle comprend un calcul de chaque somme de contrôle $\sum\mathbf{sesm_{i,j}}$ du message sortant par ajout, notamment par addition, d'au moins une compensation à ladite somme de contrôle $\sum\mathbf{ses_{i,j}}$, ladite compensation étant calculée en fonction d'un état courant d'un générateur pseudo aléatoire et d'une donnée issue d'une table de compensation. Ladite compensation est en d'autres termes une valeur ajoutée, par exemple par addition, à ladite somme de contrôle, en particulier à un champ de ladite somme de contrôle, afin que la somme de contrôle $\sum\mathbf{sesm_{i,j}}$ caractérisant le message sortant soit cohérente avec les états des Entrées/Sorties $\mathbf{esm_{i,j}}$ dudit message sortant, en particulier lorsqu'une ou plusieurs desdites Entrées/Sorties $\mathbf{esm_{i,j}}$ est caractérisée par au moins un état devant être maintenu durant ladite période $T_i$.

La présente invention propose aussi, à partir d'un dispositif de filtrage de maintien destiné à traiter un flux de $m$ messages entrants $\mathbf{Es_j}$ tels que mentionnés ci-dessus, i.e. comprenant chacun:

- $n_j$ Entrées/Sorties $\mathbf{es_{i,j}}$,
- une somme de contrôle $\sum\mathbf{ses_{i,j}}$ de signatures $\mathbf{Ses_{i,j}}$, chaque signature $\mathbf{Ses_{i,j}}$ étant destinée à coder ladite Entrée/Sortie $\mathbf{es_{i,j}}$,
- et une date $d_j$,

afin de générer à partir de chaque message entrant $\mathbf{Es_j}$ un message sortant $\mathbf{Esm_j}$ comprenant, tel que déjà mentionné ci-dessus:

- $n_j$ Entrées/Sorties $\mathbf{esm_{i,j}}$,
- une somme de contrôle $\sum\mathbf{sesm_{i,j}}$ de signatures $\mathbf{Sesm_{i,j}}$, chaque signature $\mathbf{Sesm_{i,j}}$ étant destinée à coder ladite Entrée/Sortie $\mathbf{esm_{i,j}}$,
- et une date $d_j$,

un dispositif de filtrage de maintien caractérisé en ce qu'il est capable de maintenir au moins un état d'au moins une Entrée/Sortie $\mathbf{es_{i,j}}$ d'au moins un desdits messages entrants $\mathbf{Es_j}$ durant une période de temps $T_i$ quel que soit l'état d'une Entrée/Sortie d'un message entrant consécutif audit message entrant $\mathbf{Es_j}$ en générant au moins un message sortant caractérisé en ce que l'état de la $i^{ème}$ Entrée/Sortie du message sortant est égal à l'état de l'Entrée/Sortie $\mathbf{es_{i,j}}$ de message entrant $\mathbf{Es_j}$, le dispositif de filtrage de maintien selon l'invention étant de plus caractérisé en ce qu'il comprend:

- un dispositif de calcul capable de calculer pour chaque message entrant $\mathbf{Es_j}$ à partir de ladite somme de contrôle $\sum\mathbf{ses_{i,j}}$ et par ajout, notamment par addition au moyen d'au moins un additionneur, d'au moins une compensation à ladite somme de contrôle $\sum\mathbf{ses_{i,j}}$, une somme de contrôle $\sum\mathbf{sesm_{i,j}}$ destinée à caractériser le message sortant $\mathbf{Esm_j}$;
- au moins un générateur pseudo aléatoire dont un état courant est destiné au calcul de ladite compensation, ledit générateur pseudo aléatoire étant par exemple de type LFSR (Linear Feedback Shift Register);
- au moins une table de compensation destinée au calcul de ladite compensation.

En particulier, ledit dispositif de calcul, chaque générateur pseudo aléatoire et chaque table de compensation sont avantageusement couplés les uns avec les autres afin de générer ladite compensation, calculable par exemple en fonction de l'état courant d'au moins un générateur pseudo aléatoire et d'une donnée issue d'au moins une table de compensation. Préférentiellement, le dispositif de filtrage de maintien comprend un dispositif d'extraction de date accouplable audit générateur pseudo aléatoire, et son dispositif de calcul comprend préférentiellement au moins un algorithme câblé permettant de calculer ladite compensation. En d'autres termes, une logique câblée permet en particulier au dispositif de filtrage de maintien de maintenir une ou plusieurs Entrées/Sorties à au moins un de leurs états. Ainsi, la méthode de filtrage de maintien selon l'invention est en particulier caractérisée par un couplage dudit générateur pseudo aléatoire avec un dispositif d'extraction de date capable d'extraire au moins une signature d'une somme de contrôle.

Préférentiellement, la méthode de filtrage de maintien selon l'invention est caractérisée par un découpage de ladite somme de contrôle $\sum \mathbf{sesm_{i,j}}$ en c champs, c étant supérieur ou égal à 2. Avantageusement, le dispositif de filtrage de maintien selon l'invention est capable de découper ladite somme de contrôle afin de la séparer en lesdits c champs.

Préférentiellement, la méthode selon l'invention est caractérisée par une initialisation d'au moins un générateur pseudo aléatoire avant réception d'un premier message entrant $\mathbf{Es_1}$, notamment par un cycle LSFR d'initialisation, ladite initialisation étant destinée à générer au moyen dudit générateur pseudo aléatoire une valeur d'initialisation capable de traiter uniquement au moins un état d'une Entrée/Sortie destiné à ne pas être maintenu. Le cycle LSFR d'initialisation dudit générateur pseudo aléatoire est en particulier caractérisé par une durée permettant audit générateur d'évoluer dans un grand nombre d'états, ou autrement dit de générer un nombre de valeurs suffisant avant de traiter un premier message entrant afin de permettre à un dispositif aval audit dispositif de filtrage de maintien de détecter un défaut de fonctionnement.

Préférentiellement, à partir du premier message entrant $\mathbf{Es_1}$ et pour chaque message entrant $\mathbf{Es_j}$ consécutif, la méthode de filtrage de maintien selon l'invention comprend d'une part un parcours d'un cycle LSFR court par ledit générateur pseudo aléatoire associé à ladite Entrée/Sortie $\mathbf{es_{i,j}}$ si l'Entrée/Sortie $\mathbf{es_{i,j}}$ est dans un état destiné à ne pas être maintenu, et d'autre part un parcours d'un cycle LSFR long par ledit générateur pseudo aléatoire associé à ladite Entrée/Sortie $\mathbf{es_{i,j}}$ si l'Entrée/Sortie $\mathbf{es_{i,j}}$ est dans un état destiné à être maintenu. En particulier, ledit parcours dudit cycle LSFR court et ledit parcours dudit cycle LSFR long comprennent chacun, une addition effectuée successivement pour chaque champ de la somme de contrôle $\sum \mathbf{ses_{i,j}}$, dudit champ de la somme de contrôle $\sum \mathbf{ses_{i,j}}$ avec d'une part une valeur caractérisant l'état courant dudit générateur pseudo aléatoire, et d'autre part avec ladite donnée provenant de ladite table de compensation.

Préférentiellement, la table de compensation est capable de stocker dans une mémoire lesdites données prédéterminées, chaque donnée provenant de ladite table de compensation étant en particulier pré-dédéfinie en fonction de l'Entrée/Sortie $\mathbf{es_{i,j}}$, de son état et de la signature de contrôle $\mathbf{Ses_{i,j}}$ afin de permettre soit une génération d'une signature de contrôle $\mathbf{Sesm_{i,j}}$ caractérisant un maintien de l'état d'une Entrée/Sortie durant une période $T_i$, soit une génération d'une signature de contrôle $\mathbf{Sesm_{i,j}}$ caractérisant une confirmation de l'état d'une Entrée/Sortie d'un message entrant.

En particulier, le dispositif de filtrage de maintien selon l'invention est caractérisé en ce qu'il comprend un dispositif d'extraction de date capable d'extraire la date d'au moins une somme de contrôle, d'un message entrant ou d'un message sortant, et de déterminer un incrément de date entre deux messages successifs traités par ledit dispositif de filtrage de maintien. Ainsi, une vérification systématique de l'incrément de date entre deux messages entrants (ou sortants) consécutifs permet avantageusement de garantir ledit dispositif en sécurité en s'assurant notamment que tous les messages sont bien traités.

L'invention va maintenant être décrite plus en détail en se référant à un mode de réalisation préférentiel, cité à titre d'exemple non limitatif. Selon ledit mode de réalisation préférentiel de la présente invention, la méthode de filtrage de maintien peut comprendre les étapes suivantes consécutivement à l'étape f) décrite plus haut afin de réaliser ladite compensation et ledit maintien d'un état d'une Entrée/Sortie:

    g. avant réception d'un premier message entrant $\mathbf{Es_1}$:

- une initialisation d'au moins un générateur pseudo aléatoire dudit dispositif de filtrage de maintien destinée à permettre une génération initiale d'une valeur d'initialisation. En particulier, le nombre de générateur pseudo aléatoire du dispositif de filtrage de maintien selon l'invention est égal au moins au nombre d'Entrées/Sorties par message entrant destinées à être maintenues, et ladite initialisation est en particulier caractérisée par un cycle LSFR d'initialisation permettant à un dispositif aval de détecter une erreur de fonctionnement;
- ladite génération initiale, par chaque générateur pseudo aléatoire préalablement initialisé, de ladite valeur d'initialisation. Ladite valeur d'initialisation est en particulier uniquement destinée au traitement (i.e. à la compensation) d'un premier champ C1 d'une somme de contrôle $\sum \mathbf{ses_{i,j}}$ d'un message entrant $\mathbf{Es_j}$ pour lequel au moins une de ses Entrées/Sorties $\mathbf{es_{i,j}}$ est caractérisée par un état destiné à être maintenu par ledit générateur pseudo aléatoire. Ladite valeur d'initialisation est en particulier combinée avec une donnée de compensation uniquement apte à compenser les états $P_{q,i,j}$ (f) de l'Entrée/Sortie $\mathbf{es_{i,j}}$ non destiné à être maintenus. En effet, chaque valeur d'initialisation résultant de l'initialisation de chaque générateur pseudo aléatoire est en particulier apte à caractériser un état d'initialisation dudit générateur pseudo aléatoire. Lorsque ledit générateur pseudo aléatoire est dans ledit état d'initialisation, le dispositif de filtrage selon l'invention est uniquement capable de compenser chaque état $P_{q,i,j}$(f) destiné à ne pas être maintenu, i.e. différent d'un état $P_{q,i,j}$(h), ou autrement dit, différent d'un état destiné à être maintenu, et permet donc uniquement de confirmer au moins une valeur $v_{q,i,j}$ d'une Entrée/Sortie $es_{i,j}$ associée à l'état $P_{q,i,j}$ (f). Ainsi, ladite valeur d'initialisation permet uniquement de traiter au moins un état $P_{q,i,j}$(f), ou autrement dit, ladite valeur d'initialisation permet de calculer une somme de contrôle $\sum Sesm_{i,j}$ uniquement à partir d'une Entrée/Sortie $es_{i,j}$ dont l'état $P_{q,i,j}$ est un état destiné à ne pas être maintenu;

h. à partir du premier message entrant $Es_1$ et pour chaque message entrant $Es_j$ consécutif:

- un découpage de la somme de contrôle $\sum ses_{i,j}$ en c champs C1, ..., Cc;
- puis pour chaque Entrée/Sortie $es_{i,j}$ du message entrant $Es_j$ comprenant un état $P_{q,i,j}$ (h) destiné à être maintenu au moyen dudit générateur pseudo aléatoire, chaque générateur pseudo aléatoire étant en particulier responsable, par message entrant, du traitement de la somme de contrôle $\sum Ses_{i,j}$ pour une et une seule Entrée/Sortie $es_{i,j}$ comprenant parmi les états $P_{q,i,j}$ susceptibles de la caractériser au moins un état $P_{q,i,j}$ (h) :

  ■ si l'Entrée/Sortie $es_{i,j}$ est dans un état $P_{q,i,j}$ (f), i.e. non destiné à être maintenu, ou autrement dit, nécessitant uniquement une confirmation dudit état, la méthode de filtrage de maintien comprend les étapes suivantes caractérisant en particulier un parcours d'un cycle LSFR court par un générateur pseudo aléatoire associé à ladite Entrée/Sortie $es_{i,j}$:

    1. une addition du premier champ $\sum Ses_{i,j}.C1$ de la somme de contrôle $\sum Ses_{i,j}$ avec ladite valeur d'initialisation et avec une donnée $Data_{C1,q,i,j}$ provenant d'une table de compensation, chaque donnée $Data_{C1,q,i,j}$ étant en particulier pré-dédéfinie en fonction de l'état courant du générateur pseudo aléatoire, de l'Entrée/Sortie $es_{i,j}$, de son état $P_{q,i,j}$ et de la signature de contrôle $Ses_{i,j}$ associée audit état $P_{q,i,j}$ (f) afin de permettre dans ce cas une génération, en sortie dudit dispositif de filtrage de maintien, d'une signature de contrôle $Sesm_{i,j}$ caractérisant un état $P_{q,i,j}$ de l'Entrée/Sortie $esm_{i,j}$ égal à l'état $P_{q,i,j}$ (f) de l'Entrée/Sortie $es_{i,j}$;
    2. une génération, par ledit générateur pseudo aléatoire, d'une valeur caractérisant un nouvel état dudit générateur pseudo aléatoire, puis une addition de ladite valeur caractérisant le nouvel état avec ledit second champ $\sum Ses_{i,j}.C2$ de la somme de contrôle $\sum Ses_{i,j}$ et avec une donnée $Data_{C2,q,i,j}$ provenant de ladite table de compensation, chaque donnée $Data_{C2,q,i,j}$ étant en particulier pré-dédéfinie en fonction de l'état courant du générateur pseudo aléatoire, de l'Entrée/Sortie $es_{i,j}$, de son état $P_{q,i,j}$ et de la signature de contrôle $Ses_{i,j}$ associée audit état $P_{q,i,j}$ (f) afin de permettre dans ce cas une génération, en sortie dudit dispositif de filtrage de maintien, d'une signature de contrôle $Sesm_{i,j}$ caractérisant un état $P_{q,i,j}$ de l'Entrée/Sortie $esm_{i,j}$ égal à l'état $P_{q,i,j}$ (f) de l'Entrée/Sortie $es_{i,j}$;
    3. une réitération par ledit générateur pseudo aléatoire de l'étape 2) pour chaque champ C3 à Cc de la somme de contrôle $\sum Ses_{i,j}$ si cette dernière a été découpée en plus de deux champs;
    4. après traitement de chaque champ de la somme de contrôle $\sum ses_{i,j}$, ledit générateur pseudo aléatoire génère une valeur test caractérisant un état Test Dckd dudit générateur pseudo aléatoire pour ladite Entrée/Sortie $es_{i,j}$, ledit état Test Dckd étant destiné à permettre une extraction et une vérification dudit incrément de date de la somme de contrôle obtenue après traitement de tous ses champs;
    5. une addition d'une donnée de bouclage $CompLFSR_{q,i,j}$ à une valeur caractérisant l'état courant du générateur pseudo aléatoire, i.e. l'état Test Dckd dudit générateur pseudo aléatoire à l'étape précédent l'étape 5), chaque donnée de bouclage $CompLFSR_{q,i,j}$ provenant en particulier de ladite table de compensation et étant prédéfinie en fonction de l'état $P_{q,i,j+1}$ de l'Entrée/Sortie $es_{i,j+1}$, et est destinée à permettre un retour dudit générateur à sa valeur d'initialisation caractérisant son état d'initialisation;
    6. ladite génération du message sortant $Esm_j$;

  ■ si l'Entrée/Sortie $es_{i,j}$ est dans un état $P_{q,i,j}$(h), i.e. un état destiné à être maintenu notamment durant ladite période $T_i$, la méthode de filtrage de maintien comprend les étapes suivantes caractérisant en particulier un parcours d'un cycle LSFR long par un générateur pseudo aléatoire associé à ladite Entrée/Sortie $es_{i,j}$:

    1. une génération, par ledit générateur pseudo aléatoire, d'une valeur de compensation initiale caractérisant un état de compensation initial dudit générateur pseudo aléatoire, ladite valeur de compensation initiale étant destinée uniquement à compenser le champ C1 de la somme de contrôle $\sum Ses_{i,j}$ afin de produire une nouvelle somme de contrôle $\sum Sems_{i,j}$ pour laquelle l'état de l'Entrée/Sortie $ems_{i,j}$ est égal à l'état de l'Entrée/Sortie **es$_{i,j}$,** i.e. en maintenant ledit état P$_{q,i,j}$ de ladite Entrée/Sortie **es$_{i,j}$,** ladite valeur de compensation initiale étant obtenue par addition à ladite valeur d'initialisation d'une donnée de compensation initiale;

2. une compensation du champ C1 de la somme de contrôle $\sum$**ses$_{i,j}$** par addition dudit champ C1 avec ladite valeur de compensation initiale et avec une donnée Data$_{C1,q,i,j}$ provenant d'une table de compensation, chaque donnée Data$_{C1,q,i,j}$ étant en particulier pré-dédéfinie en fonction de l'état courant du générateur pseudo aléatoire, de l'Entrée/Sortie **es$_{i,j}$,** de son état P$_{q,i,j}$ et de la signature de contrôle **Ses$_{i,j}$** associée audit état P$_{q,i,j}$ (h) afin de permettre dans ce cas une génération, en sortie dudit dispositif de filtrage de maintien, d'une signature de contrôle **Sesm$_{i,j}$** caractérisant un état P$_{q,i,j}$ de l'Entrée/Sortie **esm$_{i,j}$** égal à l'état P$_{q,i,j}$ (h) de l'Entrée/Sortie **es$_{i,j}$;**

3. une génération, par ledit générateur pseudo aléatoire, d'une valeur caractérisant un nouvel état dudit générateur pseudo aléatoire, puis une addition de ladite valeur caractérisant le nouvel état avec ledit second champ C2 de la somme de contrôle $\sum$**Ses$_{i,j}$** et une donnée Data$_{C2,q,i,j}$ provenant de ladite table de compensation, chaque donnée Data$_{C2,q,i,j}$ étant en particulier pré-dédéfinie en fonction de l'état courant du générateur pseudo aléatoire, de l'Entrée/Sortie **es$_{i,j}$,** de son état P$_{q,i,j}$ et de la signature de contrôle **Ses$_{i,j}$** associée audit état P$_{q,i,j}$ (h) afin de permettre dans ce cas une génération, en sortie dudit dispositif de filtrage de maintien, d'une signature de contrôle **Sesm$_{i,j}$** caractérisant un état P$_{q,i,j}$ de l'Entrée/Sortie **esm$_{i,j}$** égal à l'état P$_{q,i,j}$ (h) de l'Entrée/Sortie **es$_{i,j}$;**

4. une réitération par ledit générateur pseudo aléatoire de l'étape 3) pour chaque champ C3 à Cc de la somme de contrôle $\sum$**Ses$_{i,j}$** si cette dernière a été découpée en plus de deux champs;

5. après traitement de chaque champ de la somme de contrôle $\sum$**ses$_{i,j}$,** ledit générateur pseudo aléatoire génère une valeur test caractérisant un état Test Dckd dudit générateur pseudo aléatoire pour ladite Entrée/Sortie **es$_{i,j}$,** ledit état Test Dckd étant destiné à permettre une extraction et une vérification dudit incrément de date de la somme de contrôle obtenue après traitement de tous ses champs;

6. ladite génération du message sortant **Esm$_j$;**

7. puis pour chaque message entrant **Es$_w$** consécutif audit message entrant **Es$_j$** et séparé dudit message entrant **Es$_j$** par une période de temps inférieure ou égale à la période T$_i$ de maintien de l'état de ladite Entrée/Sortie **es$_{i,j}$:**

    i. une génération, par ledit générateur pseudo aléatoire, d'une valeur caractérisant un nouvel état dudit générateur pseudo aléatoire, puis une addition de ladite valeur caractérisant le nouvel état avec ledit premier champ C1 de la somme de contrôle $\sum$**Ses$_{i,w}$** et une donnée Data$_{C1,q,i,w}$ provenant de ladite table de compensation, chaque donnée Data$_{C1,q,i,w}$ étant en particulier pré-dédéfinie en fonction de l'état courant du générateur pseudo aléatoire, de l'Entrée/Sortie **es$_{i,w}$,** de son état P$_{q,i,w}$ et de la signature de contrôle **Ses$_{i,w}$** associée audit état P$_{q,i,j}$ (h) afin de permettre dans ce cas une génération, en sortie dudit dispositif de filtrage de maintien, d'une signature de contrôle **Sesm$_{i,w}$** caractérisant un état P$_{q,i,w}$ de l'Entrée/Sortie **esm$_{i,w}$** égal à l'état P$_{q,i,j}$ (h) de l'Entrée/Sortie **es$_{i,j}$,** suivi d'une répétition des étapes 3) à 6) pour ledit message entrant **Es$_w$,** i.e.

    ii. une génération, par ledit générateur pseudo aléatoire, d'une valeur caractérisant un nouvel état dudit générateur pseudo aléatoire, puis une addition de ladite valeur caractérisant le nouvel état avec ledit second champ C2 de la somme de contrôle $\sum$**Ses$_{i,w}$** et une donnée Data$_{C2,q,i,w}$ provenant de ladite table de compensation, chaque donnée Data$_{C2,q,i,w}$ étant en particulier pré-dédéfinie en fonction de l'état courant du générateur pseudo aléatoire, de l'Entrée/Sortie **es$_{i,w}$,** de son état P$_{q,i,w}$ et de la signature de contrôle **Ses$_{i,w}$** associée audit état P$_{q,i,j}$ (h) afin de permettre dans ce cas une génération, en sortie dudit dispositif de filtrage de maintien, d'une signature de contrôle **Sesm$_{i,w}$** caractérisant un état P$_{q,i,w}$ de l'Entrée/Sortie **esm$_{i,w}$** égal à l'état P$_{q,i,j}$ (h) de l'Entrée/Sortie **es$_{i,j}$;**

    iii. une réitération par ledit générateur pseudo aléatoire de l'étape 3) pour chaque champ C3 à Cc de la somme de contrôle $\sum$**Ses$_{i,w}$** si cette dernière a été découpée en plus de deux champs;

    iv. après traitement de chaque champ de la somme de contrôle $\sum$**Ses$_{i,w}$,** ledit générateur pseudo aléatoire génère une valeur test caractérisant un état Test Dckd dudit générateur pseudo aléatoire pour ladite Entrée/Sortie **es$_{i,w}$,** ledit état Test Dckd étant destiné à permettre une extraction et une vérification dudit incrément de date de la somme de contrôle obtenue après traitement de tous ses champs;

    v. ladite génération du message sortant **Esm$_w$;**

8. une addition d'une donnée de bouclage CompLFSRQ$_{q,i,w}$ à une valeur caractérisant l'état du générateur pseudo aléatoire à l'étape précédent l'étape 8), i.e. l'état Test Dckd, ou autrement dit, ladite valeur caractérisant l'état courant du générateur pseudo aléatoire, ladite donnée de bouclage Com-pLFSRQ$_{q,i,w}$ étant destinée à permettre un retour dudit générateur soit à sa valeur d'initialisation caractérisant son état d'initialisation si l'Entrée/Sortie **es$_{w+1}$** du message entrant **Es$_{w+1}$** est caractérisée par un état P$_{q,i,w+1}$(f), soit à sa valeur de compensation initiale si l'Entrée/Sortie **es$_{w+1}$** du message entrant **Es$_{w+1}$** est caractérisée par un état P$_{q,i,w+1}$ (h), **Es$_{w+1}$** étant le premier message entrant arrivant en entrée dudit dispositif de filtrage de maintien et séparé dudit message entrant **Es$_j$** par une période de temps strictement supérieure à la période T$_i$, ladite donnée de bouclage CompLFSRQ$_{q,i,w}$ provenant en particulier de ladite table de compensation et étant ainsi prédéfinie en fonction de l'état P$_{q,i,w+1}$ de l'Entrée/Sortie **es$_{i,w+1}$**;

9. un retour à l'étape h) afin de traiter le message entrant **es$_{i,w+1}$** et les prochains messages entrants consécutifs à **es$_{i,w+1}$**.

Finalement, des exemples de réalisation et d'application sont fournis à l'aide des figures suivantes:

Figure 1     exemple de filtrage de maintien destiné à maintenir l'état d'une Entrée/Sortie durant une période T$_i$.

Figure 2     exemple de réalisation d'un dispositif de filtrage de maintien selon l'invention.

Figure 3     exemple d'un maintien d'une Entrée/Sortie à un de ses états au moyen d'un dispositif de filtrage de maintien selon l'invention.

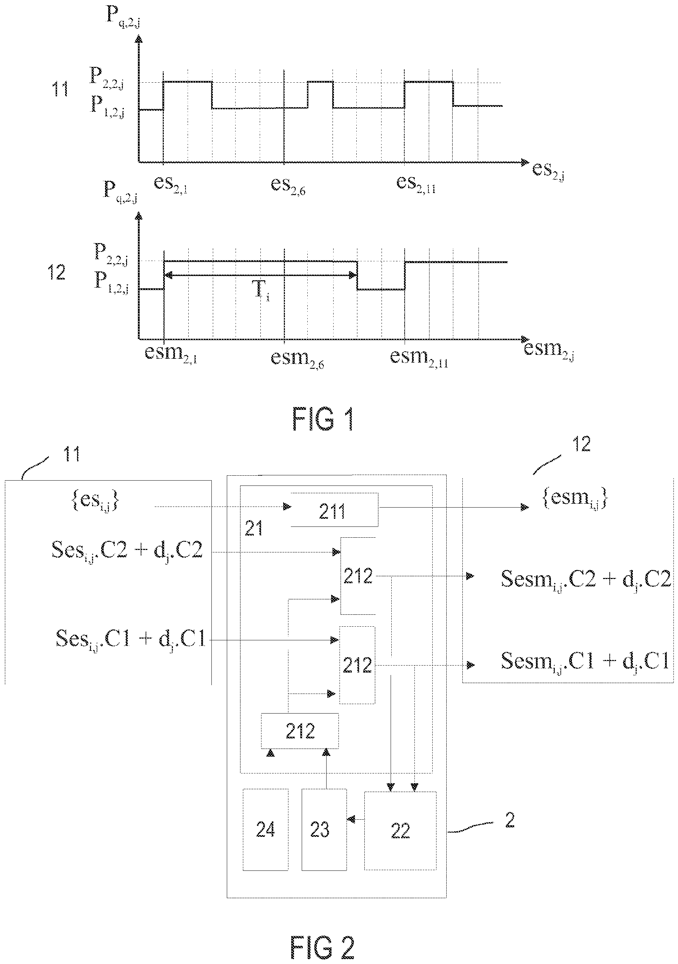

A titre d'exemple, la figure 1 montre un exemple de filtrage de maintien destiné à maintenir l'état P$_{2,2,j}$ de la 2$^{ème}$ Entrée/Sortie **es$_{2,j}$** d'un message entrant **Es$_j$**, ladite Entrée/Sortie pouvant être caractérisée par deux états P$_{q,2,j}$ (s$_2$ = 2): P$_{1,2,j}$ et P$_{2,2,j}$. Le graphique 11 représente l'état P$_{q,2,j}$ (en ordonnée) des Entrées/Sorties **es$_{2,j}$** (en abscisse) de messages entrants **Es$_j$** (j = 1,..., 14) consécutifs reçus par le dispositif de filtrage de maintien selon l'invention. Le graphique 12 représente l'état P$_{q,2,j}$ (en ordonnée) des Entrées/Sorties **esm$_{2,j}$** (en abscisse) de messages sortants **Esm$_j$** (j = 1,..., 14) consécutifs générés par le dispositif de filtrage de maintien selon l'invention après traitement des messages entrants **Es$_j$** et fournis en sortie dudit dispositif de filtrage de maintien. Lorsque l'Entrée/Sortie **es$_{2,j}$** d'un message entrant **Es$_j$** est dans ledit état P$_{2,2,j}$, alors cet état est maintenu durant un intervalle de temps ou période T$_i$ et durant cette période T$_i$ chaque Entrée/Sortie **esm$_{2,j}$** a le même état que **es$_{2,j}$** quel que soit j.

La figure 2 décrit un exemple de réalisation d'un dispositif de filtrage de maintien 2 selon l'invention. Soit i un nombre entier positif, avec i allant de 1 à n, et considérons un j$^{ème}$ message entrant 11 comprenant n Entrées/Sorties **es$_{i,j}$** binaires, i.e. s$_i$ = 2 quel que soit i et quel que soit j, i.e. P$_{q,i,j}$ est soit égal à P$_{1,i,j}$ = P$_1$ soit égal à P$_{2,i,j}$ = P$_2$, chacune desdites Entrées/Sorties **es$_{i,j}$** étant ainsi caractérisée par un état ou une valeur binaire, par exemple un état restrictif P$_2$ pouvant être associé à une valeur 0 à laquelle peut être égale ladite Entrée/Sortie **es$_{i,j}$** et un état permissif P$_1$ pouvant être associé à une valeur 1 à laquelle peut être égale ladite Entrée/Sortie **es$_{i,j}$**, lesdites n Entrées/Sorties **es$_{i,j}$** étant de plus codées avec une somme de contrôle $\sum$**Ses$_{i,j}$** découpée en deux champs, respectivement un premier champ ($\sum$**Ses$_{i,j}$**).C1 et un second champ ($\sum$**Ses$_{i,j}$**).C2, ledit codage étant par exemple réalisé par un processeur sécuritaire codé en amont du dispositif de filtrage de maintien 2 selon l'invention. La somme de contrôle $\sum$**Ses$_{i,j}$** est en particulier constituée d'une somme arithmétique de codes ou de signatures initiales **Ses$_{i,j}$** pré-déterminables, chaque signature initiale **Ses$_{i,j}$** étant associée à l'état d'une Entrée/Sortie **es$_{i,j}$** du message entrant 11 et destinée à son codage. Ledit message entrant 11 peut dès lors s'écrire de la façon suivante:

$$\mathtt{[\{es_{i,j}\},\ (\Sigma Ses_{i,j}).C1,\ (\Sigma Ses_{i,j}).C2] + d_j}$$

où l'indice j permet d'identifier le j$^{ème}$ échantillon de message entrant 11 reçu par le dispositif de filtrage de maintien 2, j allant par exemple de 1 à m, m étant un entier positif. d$_j$ est un paramètre permettant de dater ledit échantillon j, ledit paramètre d$_j$ étant par exemple incrémenté pour chaque échantillon reçu par le dispositif de filtrage de maintien 2. Ledit premier champ selon l'invention, respectivement le second champ (ou de manière générale le c$^{ème}$ champ dans le cas d'un découpage de la somme de contrôle en c champs), est constitué pour chaque échantillon j de la somme modulo A1, respectivement A2 (ou respectivement Ac), des signatures appartenant audit premier champ **Ses$_{i,j}$**.C1, respectivement des signatures appartenant audit second champ **Ses$_{i,j}$**.C2 (ou respectivement des signatures appartenant au c$^{ème}$ champ **Ses$_{i,j}$**.Cc), correspondant aux états des entrées **es$_{i,j}$** pour ledit échantillon j additionné de la date d$_j$.C1 dudit échantillon j, respectivement D$_j$.C2 (ou respectivement D$_j$.Cc). Chaque champ selon l'invention, identifié ci-dessus par C1, respectivement par C2 (ou respectivement Cc), représente une somme d'informations non séparable, i. e. il n'est pas possible d'extraire une signature **Ses$_{i,j}$**, ni une date d$_j$ dudit champ. Par exemple, A1 et A2 (jusqu'à respectivement Ac dans le cas d'un découpage de la somme de contrôle en c champs) sont des nombres premiers compris entre 2$^{23}$

et $2^{24}$ et en particulier, chacun des champs de l'échantillon j, $(\sum Ses_{i,j}).C1 + d_j.C1$, $(\sum Ses_{i,j}).C2 + d_j.C2$, (jusqu'à respectivement $(\sum Ses_{i,j}).Cc + d_j.Cc$), peut comprendre 24 bits afin de faciliter des calculs par un processeur 32 bits placé en aval du dispositif de filtrage de maintien 2. Ainsi, un message entrant comprenant un ensemble d'Entrées/Sorties binaires $es_{i,j}$ et c découpages de sa somme de contrôle comprend c+1 groupes ou paquets d'information indissociable ou autrement dit non séparable.

Un flux de m échantillons de messages entrant 11 comprenant chacun lesdites n Entrées/Sorties binaires peut alors être représenté par m ensembles $Es_j = \{es_{1,j},..., es_{n,j}\}$ successifs comprenant lesdites n Entrées/Sorties codées par ladite somme de contrôle découpée selon le premier et le second champ:

$(Ses_{1,j} +...+ Ses_{n,j}).C1+D_j.C1$ et $(Ses_{1,j} +...+ Ses_{n,j}).C2+D_j.C2$.

L'état de chaque Entrée/Sortie $es_i$ est ainsi sécurisé par une signature de contrôle $Ses_i$ intégrée dans la somme de contrôle présentée ci-dessus. La signature de contrôle $Ses_i$ selon l'invention est en particulier une valeur comprise entre 1 et A, choisie au hasard par un dispositif amont du dispositif de filtrage, par exemple calculée par un générateur pseudo aléatoire ou produite suivant une loi de calcul mathématique prédéfinie. Une valeur est choisie pour les deux champs C1 et C2 de la signature de contrôle et pour chacun des états possibles de l'Entrée/Sortie $es_i$.

Par exemple, pour une Entrée/Sortie $es_i$ caractérisée par un état restrictif $es_i = 0$ et un état permissif $es_i = 1$ nous avons:

$es_i$ = 1: $Ses_i.C1$ = SESiVrai.C1 $Ses_i.C2$ = SESiVrai.C2
$es_i$ = 0: $Ses_i.C1$ = SESiFaux.C1 $Ses_i.C2$ = SESiFaux.C2

Les valeurs successives des signatures de contrôles $Ses_i$ de l'Entrée/Sortie i d'un flux de message entrant sont notamment notées $Ses_{i,j}$ pour le j$^{ème}$ message entrant. Il sera procédé de manière analogue pour le message sortant.

Après le maintien de l'Entrée/Sortie $es_{i,j}$ à un de ses états binaires, ou autrement dit, après le maintien de l'Entrée/Sortie $es_{i,j}$ à une des ses valeurs 1 ou 0, la somme de contrôle traitée par le dispositif de filtrage de maintien 2 a évolué et comprend une somme de signatures $Sesm_{i,j}$ finales destinées à la sécurisation du message sortant 12. Chacun des champs de la somme de contrôle peut alors s'écrire, en reprenant l'exemple précédent:

$esm_i$ = 1: $Sesm_i.C1$ = SESMiVrai.C1 $Sesm_i.C2$ = SESMiVrai.C2
$esm_i$ = 0: $Sesm_i.C1$ = SESMiFaux.C1 $Sesm_i.C2$ = SESMiFaux.C2

En particulier, pour chaque Entrée/Sortie non maintenue, la signature $Sesm_i$ de sécurisation obtenue après maintien est choisie égale à la signature initiale $Ses_i$ de sécurisation de l'Entrée/Sortie du message entrant: SESi* = SESMi*, i.e. SESiVrai.C1 = SESMiVrai.C1; SESiVrai.C2 = SESMiVrai.C2; SESiFaux.C1 = SESMiFaux.C1; SESiFaux.C2 = SESMiFaux.C2.

Préférentiellement, pour chaque Entrée/Sortie maintenue de l'échantillon j, la signature $Sesm_i$ finale destinée à la sécurisation et obtenue après maintien est choisie au hasard et est différente de la signature initiale $Ses_i$ de sécurisation de l'Entrée/Sortie du message entrant 11: SESi* ≠ SESMi*, i.e. SESiVrai.C1 ≠ SESMiVrai.C1; SESiVrai.C2 ≠ SESMiVrai.C2; SESiFaux.C1 ≠ SESMiFaux.C1; SESiFaux.C2 ≠ SESMiFaux.C2. Cela permet notamment de garantir un traitement effectif des Entrées/Sorties par le dispositif de filtrage de maintien 2 selon l'invention.

Durant le maintien d'une valeur ou d'un état d'une Entrée/Sortie d'un échantillon j, une compensation provenant d'une table de compensation 24 est ajoutée, par exemple au moyen d'au moins un additionneur 212 du dispositif de calcul 21, à la somme de contrôle, par exemple une première compensation au premier champ de la somme de contrôle, et une seconde compensation au second champ de la somme de contrôle, afin de produire une somme de contrôle comprenant une nouvelle signature pour chaque Entrée/Sortie maintenue. Cette compensation peut être par exemple calculée à partir de l'état d'un générateur pseudo aléatoire 23 et d'une donnée pré-calculée mémorisée dans la table de compensation 24.

Ainsi, le dispositif de filtrage de maintien 2 est capable de générer à partir dudit flux de m échantillons de messages entrants comprenant n Entrées/Sorties binaires, un flux de m échantillons de messages sortants 12 comprenant chacun n Entrées/Sorties binaires, ledit flux de messages sortants pouvant être représenté par m ensembles $Esm_j = \{esm_{1,j},..., esm_{n,j}\}$ successifs comprenant chacun lesdites n Entrées/Sorties $esm_{i,j}$ codées par une somme de contrôle $\sum Sesm_{i,j}$ calculée par ledit dispositif de filtrage de maintien afin de tenir compte de chaque Entrée/Sortie dont l'état a été maintenu dans ledit message sortant 12.

Le fonctionnement du générateur pseudo aléatoire 23 et le contenu de la table de compensation 24 sont en particulier aptes à garantir que seules les données nécessaires pour réaliser le maintien de l'Entrée/Sortie destinée à être maintenue sont disponibles.

Préférentiellement, pour chaque échantillon reçu par le dispositif de filtrage de maintien 2, les sommes de contrôle datées sont compensées par l'ajout d'un état courant du générateur pseudo aléatoire et d'une compensation issue de la table de compensation. Le choix de la donnée dans la table de compensation 24, ainsi que l'évolution du générateur pseudo aléatoire 23 dépendent notamment de la valeur fonctionnelle de l'Entrée/Sortie à maintenir.

Le générateur pseudo aléatoire 23, par exemple de type LFSR (Linear Feedback Shift Register)/accumulateur, peut ainsi être avantageusement utilisé afin de maintenir temporellement en sécurité l'état d'une Entrée/Sortie dudit message entrant 11 durant une période $T_i$ prédéterminée. En particulier, à chaque Entrée/Sortie d'un message entrant 11 destinée à être maintenue est en particulier associable un générateur pseudo aléatoire 23, notamment un et un seul générateur pseudo aléatoire 23, destiné au calcul du maintien ou non maintien de ladite Entrée/Sortie. Chaque générateur pseudo aléatoire 23 est en particulier capable de parcourir deux cycles LFSR de contrôle, chacun définissant un mode d'évolution dudit générateur pseudo aléatoire 23: un cycle LFSR court associé à une valeur d'Entrée/Sortie non maintenue et à un mode LFSR court d'évolution, et un cycle LFSR long associé au maintien d'une valeur d'Entrée/Sortie et à un mode LFSR long d'évolution dudit générateur pseudo aléatoire 23. Ainsi, le dispositif de filtrage de maintien 2 comprend en particulier au moins deux fonctions: une fonction de maintien destinée au maintien de l'état d'une Entrée/Sortie d'un message entrant 11 associée au mode LSFR long, et une fonction de non-maintien ou évolutive destinée au non maintien de l'état d'une Entrée/Sortie d'un message entrant 11, associée au mode LFSR court.

Préférentiellement, chaque générateur pseudo aléatoire 23 comprend une fonction de prédétermination d'Entrées/Sorties permettant audit générateur de sélectionner, en fonction du message entrant 11, une unique Entrée/Sortie dudit message entrant dont l'état doit être maintenu. Ladite unique Entrée/Sortie dudit message entrant destinée à être traitée par ledit générateur pseudo aléatoire 23 est qualifiée dans la suite de ce document d'Entrée/Sortie "prédéterminée". La sélection réalisable par ledit générateur pseudo aléatoire 23 dépend du message entrant 11, par exemple d'un type de message entrant 11. Ainsi, ledit dispositif de filtrage de maintien selon l'invention est capable de prédéfinir ou de prédéterminer pour chaque message entrant 11, au moins une Entrée/Sortie "prédéterminée" qui sera traitée par un et un seul générateur pseudo aléatoire et dont l'état sera maintenu par ledit dispositif de filtrage de maintien 2, chaque Entrée/Sortie "prédéterminée" étant ladite unique Entrée/Sortie dudit message entrant traitée par ledit générateur pseudo aléatoire.

En d'autres termes, une et une seule Entrée/Sortie $es_{i,j}$ par message entrant, i.e. ladite Entrée/Sortie "prédéterminée", peut ainsi préférentiellement être traitée par ledit générateur pseudo aléatoire. Afin de traiter plusieurs Entrées/Sorties d'un message entrant, plusieurs générateurs pseudo aléatoire en parallèle ou en série peuvent en particulier être utilisés, afin que chacun traite une Entrée/Sortie différente dudit message entrant.

Préférentiellement, le dispositif de calcul 21 comprend également un module 211 destiné au calcul des Entrées/Sorties $esm_{i,j}$ du message sortant 12 à partir des Entrées/Sorties $es_{i,j}$ du message entrant 11, ledit module 211 étant capable de calculer lesdites Entrées/Sorties $esm_{i,j}$ du message sortant 12 en fonction d'un état des Entrées/Sorties $es_{i,j}$ du message entrant 11. En particulier, ledit module 211 comprend une table de commande apte à décrire chaque Entrée/Sortie $es_{i,j}$ susceptible d'être maintenue et une machine à état(s) fini(s) capable de suivre l'état de chaque générateur pseudo aléatoire et de calculer chaque état de chaque Entrée/Sortie $esm_{i,j}$ à partir des états de chaque Entrée/Sortie $es_{i,j}$ et d'un contenu de ladite table de commande. De manière préférentielle, le dispositif de filtrage de maintien 2 comprend un dispositif d'extraction 22 de signature accouplable audit générateur pseudo aléatoire 23 et au dispositif de calcul 21 et capable d'extraire d'une somme de contrôle d'un message sortant un incrément de date ou une date afin de vérifier que chaque message entrant 11 est traité par le dispositif de filtrage de maintien 2.

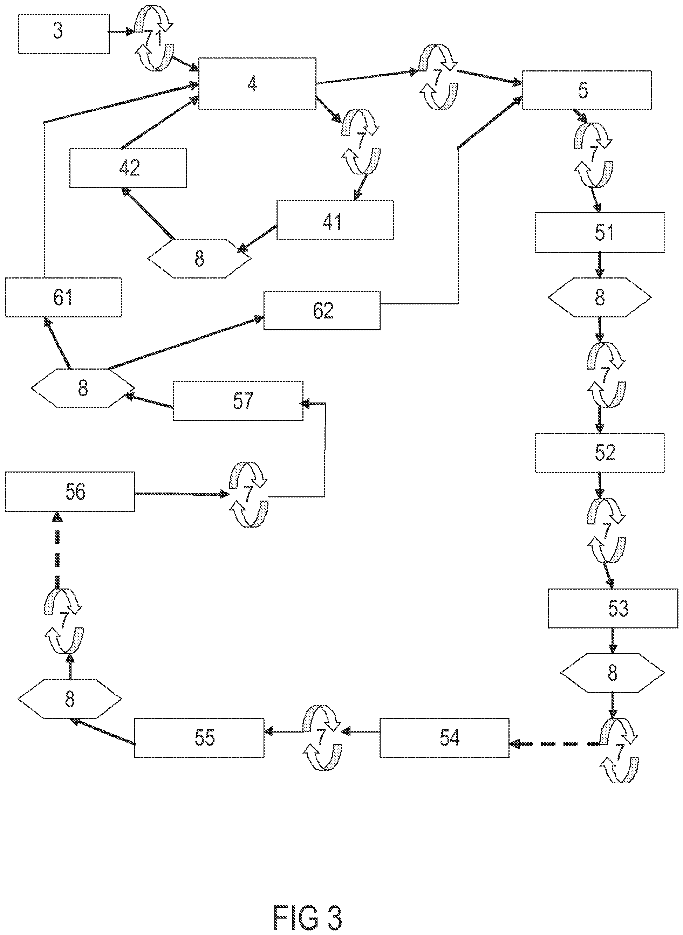

Nous allons décrire à présent au moyen de la figure 3 les étapes successives du traitement d'un message entrant reçu par le dispositif de filtrage de maintien selon l'invention, par exemple dans le cas d'un maintien d'une Entrée/Sortie dudit message entrant à son état restrictif: $es_{i,j}$ = 0, en reprenant les caractéristiques du message entrant et du message sortant tel que données pour la figure 2.

Dans un premier temps, le générateur pseudo aléatoire est initialisé 3, et évolue en particulier selon un cycle LSFR d'initialisation 71 destiné à amener ledit générateur pseudo aléatoire à un état initial 4 caractérisé par une valeur initiale Comp_a_1.C1 destinée à la compensation d'un état permissif. Son initialisation 3 peut par exemple être corrélée à une réinitialisation d'un dispositif apte à générer des Entrées/Sorties destinées à être traitées par ledit dispositif de filtrage de maintien, ou à une réinitialisation déclenchée par une détection d'une erreur de fonctionnement. Le cycle LSFR d'initialisation permet audit générateur pseudo aléatoire d'évoluer dans un grand nombre d'état durant une période d'une durée paramétrable en fonction d'un temps nécessaire à une détection de l'erreur de fonctionnement par un dispositif aval.

Dans cet état initial 4, la fonction de maintien du dispositif de filtrage de maintien selon l'invention comprend uniquement une compensation permettant au générateur pseudo aléatoire de confirmer et de calculer un état permissif de l'Entrée/Sortie. Dans son état initial 4, le générateur pseudo aléatoire ne peut donc pas calculer un état restrictif d'une Entrée/Sortie "prédéterminée" qu'il est destiné à traiter et dont l'état est restrictif en entrée du dispositif de filtrage de maintien, mais peut uniquement traiter une Entrée/Sortie "prédéterminée" dont l'état est permissif en entrée du dispositif de filtrage de maintien.

Si l'état de l'Entrée/Sortie "prédéterminée" d'un message entrant est permissif (i.e. $es_{i,j}$ = 1) en entrée dudit dispositif de filtrage de maintien, la fonction évolutive dudit générateur est utilisée par ce dernier: le champ C1 de la somme de contrôle destinée au codage des Entrées/Sorties du message entrant (i.e. $\sum Ses_{i,j}.C1$) est compensé, i.e.

ledit dispositif de filtrage de maintien est capable d'additionner, par exemple au moyen d'un additionneur, au champ C1 de la somme de contrôle, ladite valeur initiale Comp_a_1.C1 caractérisant ledit état initial 4 ainsi qu'une donnée choisie dans la table de compensation, puis le générateur évolue en mode LFSR 7 court vers un état 41 caractérisé par une valeur Comp_a_1.C2 permettant une compensation du champ C2 de la somme de contrôle destinée au codage du message entrant. Cela permet avantageusement d'éviter un blocage du générateur pseudo aléatoire sur un état de compensation. Le choix de ladite donnée dans la table de compensation dépend en particulier de l'état de l'Entrée/Sortie "prédéterminée" du message entrant et du cycle LFSR de contrôle du générateur pseudo aléatoire.

Chaque Entrée/Sortie dudit message entrant est susceptible d'être une Entrée/Sortie "prédéterminée" pour un des générateurs pseudos aléatoires dudit dispositif de filtrage de maintien. Ainsi, une fois que chaque Entrée/Sortie "prédéterminée" dudit message entrant a été traitée par le générateur pseudo aléatoire l'ayant sélectionnée, par exemple par plusieurs générateurs pseudo aléatoire de type LFSR travaillant en parallèle ou en série et ayant chacun simultanément sélectionné leur Entrée/Sortie "prédéterminée" dudit message entrant, la validité de la somme de contrôle obtenue après traitement de toutes les Entrées/Sorties du message destinées à être maintenues est vérifiée par ledit dispositif de filtrage de maintien, notamment par soustraction de la signature de chaque Entrée/Sortie de la somme de contrôle afin d'en extraire la date. Avantageusement, une extraction et une vérification 8 de la date permet en particulier de garantir que chaque échantillon de message entrant est traité par ledit dispositif de filtrage de maintien et est associé à un message sortant. A cette fin, un état "Test Dckd" dudit générateur pseudo aléatoire permet préférentiellement de réaliser une vérification différentielle de la date.

Ainsi, à chaque cycle d'acquisition d'un message entrant destiné à être traité par le dispositif de filtrage de maintien, la date dudit message entrant est vérifiée par comparaison avec la date du message entrant précédent qui a été traité, i.e. le message sortant, afin de garantir que chaque message entrant est pris en compte, ce qui permet avantageusement une mise en sécurité du dispositif de filtrage de maintien. Après vérification, et en cas de validité de la somme de contrôle, une première donnée de bouclage 42 est associée à l'état du générateur pseudo aléatoire afin de permettre un retour dudit générateur dans son état initial 4 permettant de compenser une Entrée/Sortie dont l'état est permissif. La première donnée de bouclage 42 est en particulier caractérisée par une valeur de compensation CompLFSR1 destinée à la compensation du champ C1 d'une Entrée/Sortie permissive d'un message entrant consécutif au message précédemment traité. En cas d'erreur, la somme de contrôle est définitivement altérée et les messages produits par ledit dispositif de filtrage de maintien ne sont plus utilisables par des dispositifs avals audit dispositif de filtrage de maintien. Préférentiellement, le dispositif de filtrage de maintien est automatiquement réinitialisable en cas de détection d'une erreur de fonctionnement par un dispositif de surveillance et ladite réinitialisation permet au générateur pseudo aléatoire de retourner à son état initial 4 au moyen d'une évolution selon ledit cycle LSFR d'initialisation 71. L'évolution selon ledit cycle LSFR d'initialisation 71 garanti un temps minimum d'indisponibilité du dispositif de filtrage de maintien afin de garantir que tout défaut est détecté par les dispositifs avals.

Si l'état de l'Entrée/Sortie du message entrant est restrictif (i.e. $es_{i,j} = 0$) en entrée dudit dispositif de filtrage de maintien, le générateur pseudo aléatoire est en particulier capable d'évoluer selon un cycle LSFR 7 vers un état de compensation initial 5 d'une Entrée/Sortie restrictive permettant uniquement une compensation de la somme de contrôle vers un état restrictif de l'Entrée/Sortie. En d'autres termes, ledit état de compensation initial 5 est caractérisé par une valeur initiale Comp_a_0_1.C1 permettant, lors de la compensation de la somme de contrôle du message entrant lorsque l'état de l'Entrée/Sortie du message entrant est restrictif, de générer par compensation en particulier du champ C1 de ladite somme de contrôle, une nouvelle somme de contrôle qui comprend un champ C1 compensé et le champ C2 et qui est destinée au maintien d'un état restrictif pour ladite Entrée/Sortie. Ladite compensation comprend en particulier un ajout, notamment par addition, au champ C1 de la somme de contrôle, de ladite valeur initiale Comp_a_0_1.C1 et d'une donnée choisie dans la table de compensation, chacune destinée au maintien de l'Entrée/Sortie dans son état restrictif. Puis ledit générateur pseudo aléatoire évolue en mode LFSR 7 vers un état 51 caractérisé par une valeur Comp_a_0_1.C2 permettant une compensation du champ C2 de la somme de contrôle et destinée au maintien de l'Entrée/Sortie dans son état restrictif. Après chaque compensation du champ C1 et du champ C2 de la somme de contrôle, un dispositif d'extraction de date est en particulier capable de vérifier 8 une évolution de l'incrément de date, notamment par extraction de la date de la somme de contrôle dont les champs ont été compensés, puis par vérification de ladite date par rapport à la date d'un message sortant et/ou d'un message entrant précédent le message en cours de traitement par ledit dispositif de filtrage de maintien. Dans tous les cas, après chaque compensation, le dispositif de filtrage de maintien est capable de créer un message sortant comprenant un nombre d'Entrées/Sorties $esm_{i,j}$ identique au nombre d'Entrées/Sorties du message entrant, mais caractérisé en ce que l'état de chaque Entrée/Sortie dont l'état est destiné à être maintenu a été maintenu, et dont la signature ou plus précisément la somme de contrôle qui y est associée a été actualisée afin de tenir compte de l'éventuel maintien d'une ou plusieurs Entrées/Sorties dudit message entrant.

Après vérification 8 de l'incrément de date et maintien de l'Entrée/Sortie dans son état restrictif à partir de la compensation des champs C1 et C2 de la somme de contrôle au moyen respectivement de la valeur initiale Comp_a_0_1.C1 de l'état initial 5 et de la valeur Comp_a_0_1.C2 de l'état 51, le dispositif de filtrage de maintien est capable de maintenir, durant une période $T_i$ égale au temps nécessaire à l'accomplissement de $T_i - 1$ étapes successives ($T_i$ étant une durée exprimée en nombres de messages successifs), l'Entrée/Sortie dans son état restrictif en accomplissant successivement à chaque étape t, t allant de 2 à $T_i$:

- une génération par évolution dudit générateur pseudo aléatoire selon un cycle LSFR 7 d'un état 52, 54, 56 caractérisé par une valeur de compensation Comp_a_0_t.C1;
- une compensation du premier champ C1 de la somme de contrôle par ajout à ladite somme de contrôle de ladite valeur Comp_a_0_t.C1 et d'une donnée de la table de compensation destinée à la compensation du premier champ C1 de la somme de contrôle dans un état uniquement restrictif de ladite Entrée/Sortie;
- une génération par évolution dudit générateur pseudo aléatoire selon un cycle LSFR 7 d'un état 53, 55, 57 caractérisé par une valeur de compensation Comp_a_0_t.C2;
- une compensation du second champ C2 de la somme de contrôle par ajout à ladite somme de contrôle de la valeur Comp_a_0_t.C2 et d'une donnée de la table de compensation destinée à la compensation du second champ C2 de la somme de contrôle dans un état uniquement restrictif de ladite Entrée/Sortie;
- une vérification 8 de l'incrément de date, par exemple par extraction de ladite date de la somme de contrôle;
- une génération d'un message sortant.

Le nombre ($T_i$ -1) d'étapes successives détermine la durée de maintien de l'Entrée/Sortie dans son état restrictif et peut-être prédéterminé en fonction du message entrant, par exemple en fonction d'un type de message entrant.

Après la ($T_i$-1)$^{ème}$ étape (i.e. t = $T_i$), le dispositif de filtrage de maintien est en particulier capable de générer soit une seconde donnée de bouclage CompLFSR2 61 permettant au générateur de retourner à l'état initial 4 caractérisé par la valeur initiale Comp_a_1.C1 destinée à la compensation d'un état permissif d'une Entrée/Sortie du prochain message entrant, soit une troisième donnée de bouclage CompLFSR3 62 permettant au générateur de retourner à l'état de compensation initial 5 d'une Entrée/Sortie restrictive. Préférentiellement, le générateur pseudo aléatoire est capable d'associer, notamment par addition, à son état résultant de la ($T_i$-1)$^{ème}$ étape et de la vérification 8 de date ladite seconde donnée de bouclage CompLFSR2 61 si le message entrant consécutif au message entrant ayant été traité comprend une Entrée/Sortie caractérisée par un état permissif, ou ladite troisième donnée de bouclage CompLFSR3 62 si ledit message entrant consécutif au message entrant ayant été traité comprend une Entrée/Sortie caractérisée par un état restrictif.

Ainsi, une valeur de compensation, comme par exemple la valeur initiale Comp_a_1.C1 caractérisant l'état initial, est associable à chaque état du générateur pseudo aléatoire et permet de compenser la somme de contrôle, ou en particulier un des champs de la somme de contrôle, tout en garantissant soit le maintien d'une Entrée/Sortie d'un message entrant, soit son non maintien, i.e. sa confirmation.

Afin de tracer l'opération de maintien réalisée par le générateur pseudo aléatoire, les signatures de l'Entrée/Sortie après maintien de ladite Entrée/Sortie, i.e. dans le message sortant, sont en particulier différentes des signatures de ladite Entrée/Sortie avant son maintien, i.e. dans le message entrant, en entrée du dispositif de filtrage de maintien. Par contre, les signatures associées à un message entrant dont les Entrées/Sorties ne nécessitent aucun maintien de leur état respectif sont préférentiellement identiques aux signatures du message sortant.

Un exemple de liste des compensations pour un maintien restrictif de la i$^{ème}$ Entrée/Sortie d'un message entrant est donné ci-dessous:
Lorsque un j$^{ème}$ message entrant est réceptionné par le dispositif de filtrage de maintien, sa i$^{ème}$ Entrée/Sortie **es$_i$** est codée par exemple par une signature SESiVrai si son état est permissif, et respectivement une signature SESiFaux si son état est restrictif. Lors du maintien de cette i$^{ème}$ Entrée/Sortie, cette dernière est transformée par le dispositif de filtrage de maintien en une i$^{ème}$ Entrée/Sortie **esm$_i$** d'un message sortant, ladite i$^{ème}$ Entrée/Sortie **esm$_i$** étant codée par une signature SESMiVrai si l'état de **es$_i$** était permissif, et respectivement SESMiFaux si l'état de **es$_i$** était restrictif, chaque signature étant prédéfinie et choisie au hasard.

La donnée de la table de compensation destinée à la compensation d'une somme de contrôle codant une Entrée/Sortie dont l'état en entrée dudit dispositif de filtrage de maintien est permissif, et donc associé à la valeur Comp_a_1.C1 ou respectivement Comp_a_1.C2, est donnée par exemple par:

```
CompNMaintienR1_i.C1 =

              SESMiVrai.C1 – SESiVrai.C1 – Comp_a_1.C1
```

et respectivement par

```
CompNMaintienR1_i.C2 =
                    SESMiVrai.C2 - SESiVrai.C2 - Comp_a_1.C2
```

La donnée de compensation susmentionnée empêche avantageusement toute compensation vers un état restrictif de ladite Entrée/Sortie.

De manière similaire, la donnée de la table de compensation destinée à la compensation d'une somme de contrôle codant une Entrée/Sortie dont l'état en entrée dudit dispositif de filtrage de maintien est restrictif, et donc associé à la valeur Comp_a_0_1.C1 ou respectivement Comp_a_0_1.C2, est par exemple donnée par:

```
CompMaintienR00_i_1.C1 =
                    SESMiFaux.C1 - SESiFaux.C1 - Comp_a_0_1.C1
```

et respectivement par

```
CompMaintienR00_i_1.C2 =
                    SESMiFaux.C2 - SESiFaux.C2 - Comp_a_0_1.C2
```

La donnée de compensation susmentionnée empêche une prise en compte d'un état permissif de l'Entrée/Sortie.

Les données de la table de compensation associées au maintien de l'état restrictif de ladite Entrée/Sortie durant lesdites $T_i$-1 étapes successives associées aux états caractérisés par les valeurs Comp_a_0_t.C1 ou respectivement Comp_a_0_t.C2 du générateur pseudo aléatoire sont par exemple données par (t allant de 2 à $T_i$) :

```
CompMaintienR00_i_k.C1 =
                    SESMiFaux.C1 - SESiFaux.C1 - Comp_a_0_t.C1

CompMaintienR01_i_k.C1 =
                    SESMiFaux.C1 - SESiVrai.C1 - Comp_a_0_t.C1
```

et respectivement

```
CompMaintienR00_i_k.C2 =
                    SESMiFaux.C2 - SESiFaux.C1 - Comp_a_0_t.C2

CompMaintienR01_i_k.C2 =
                    SESMiFaux.C2 - SESiVrai.C2 - Comp_a_0_t.C2
```

Ainsi, quel que soit l'état de l'Entrée/Sortie, cette dernière est maintenue restrictive dans le message sortant.

Une fois la période de maintien terminée, i.e. après que le générateur pseudo aléatoire a été dans l'état caractérisé par la valeur Comp_a_0_T.C2 (i.e. t = T) et que la vérification de la date a été effectuée, notamment au moyen de l'état Test Dckd du générateur pseudo aléatoire, ledit générateur pseudo aléatoire doit retourner soit à l'état initial caractérisé par la valeur Comp_a_1.C1 si l'Entrée/Sortie du nouveau message entrant est caractérisée par un état permissif, ou à la valeur Comp_a_0_1.C1 si l'Entrée/Sortie du nouveau message entrant est caractérisée par un état restrictif. A cette fin, une seconde donnée de bouclage provenant en particulier de la table de compensation est préférentiellement additionnée à la valeur de l'état Test Dckd du générateur pseudo aléatoire afin de le faire retourner à sa valeur Comp_a_1.C1, ou similairement une seconde donnée de bouclage provenant en particulier de la table de compensation est préférentiellement additionnée à la valeur de l'état Test Dckd du générateur pseudo aléatoire afin de le faire retourner à sa valeur Comp_a_0_1.C1. Egalement, une première donnée de bouclage est en particulier apte à permettre un retour du générateur pseudo aléatoire à sa valeur Comp_a_1.C1 lorsque ledit générateur a traité une entrée permissive. Lesdites première, seconde et troisième données de bouclage sont par exemple respectivement données par:

```
CompLFSR1 = Comp_a_1.C1 - Test Dckd(Comp_a_1.C2)


CompLFSR2 = Comp_a_1.C1 - Test Dckd(Comp_a_0_T.C2)


CompLFSR3 = Comp_a_0_1.C1 - Test Dckd(Comp_a_0_T.C2)
```

Préférentiellement, le dispositif d'extraction de date comprend en particulier une table d'extraction permettant dans un premier temps de générer les signatures $Sesm_i$ d'Entrées/Sorties d'une somme de contrôle au moyen des valeurs des Entrées/Sorties $esm_i$ du message sortant, et dans un deuxième temps de soustraire les signatures d'Entrées/Sorties $Sesm_i$ de la somme de contrôle $\sum Sesm_i$ afin d'extraire la date de ladite somme de contrôle. La table d'extraction et les calculs qui y sont associés sont notamment confinés, i.e. inutilisable pour d'autres calculs afin d'éviter la construction à tort de messages d'Entrées/Sorties erronés ayant une somme de contrôle correcte.

En résumé, la méthode et le dispositif selon l'invention présentent plusieurs avantages par rapport aux méthodes et dispositifs existant en ce que:

- ils s'affranchissent d'une utilisation d'un processeur codé,
- ils sont économiquement avantageux par rapport aux méthodes et dispositifs utilisant un processeur codé, car ils permettent de réaliser une fonction de maintien en sécurité d'une Entrée/Sortie libre d'utilisation d'un calculateur sécuritaire, et donc sans logiciel, économisant ainsi de nombreux composants électroniques et des heures d'ingénierie logicielle,
- ils permettent une fréquence d'échantillonnage des Entrées/Sorties plus élevée que celle permise par une solution logicielle.


## Revendications

1. Méthode de filtrage de maintien en sécurité d'au moins une Entrée/Sortie $es_{i,j}$ à au moins un état sur un flux de m messages entrants $Es_j$ successifs, chaque message entrant $Es_j$ comprenant:

- un ensemble de $n_j$ desdites Entrées/Sorties $es_{i,j}$ ($i = 1,...,n_j$), chacune caractérisable par $s_i$ états $P_{q,i,j}$, chaque état $P_{q,i,j}$ étant associé à une valeur $v_{q,i,j}$ à laquelle est égale ladite Entrée/Sortie $es_{i,j}$ lorsqu'elle est dans ledit état $P_{q,i,j}$;
- une somme de contrôle $\sum ses_{i,j}$ de signatures $Ses_{i,j}$, chaque signature $Ses_{i,j}$ étant destinée à coder ladite Entrée/Sortie $es_{i,j}$;
- et une date $d_j$ servant à dater la somme de contrôle, ladite date étant incrémentée par un incrément de date à chaque message entrant;

ladite méthode de filtrage de maintien étant capable de générer à partir de chaque message entrant $Es_j$ un message sortant $Esm_j$, tel que le message sortant $Esm_j$ généré à partir du message entrant $Es_j$ comprend:

- un ensemble de $n_j$ Entrées/Sorties $esm_{i,j}$, chacune caractérisable par lesdits $s_i$ états $P_{q,i,j}$, la valeur $v_{q,i,j}$ de l'Entrée/Sortie $esm_{i,j}$ du message sortant $Esm_j$ pouvant être égale ou différente de la valeur $v_{q,i,j}$ de l'Entrée/Sortie $es_{i,j}$ du message entrant $Es_j$ en fonction d'un éventuel maintien de l'état $P_{q,i,j}$ de l'Entrée/Sortie $es_{i,j}$, la valeur $v_{q,i,j}$ de l'Entrée/Sortie $esm_{i,j}$ du message sortant $Esm_j$ étant égale à une valeur $v_{q,i,t}$ d'une Entrée/Sortie $esm_{i,t}$ d'un message sortant $Esm_t$ quel que soit l'état $P_{q,i,j}$ de l'Entrée/Sortie $es_{i,j}$ du message entrant $Es_j$ si et seulement si il existe un $t^{ème}$ message entrant $Es_t$, $j-T_i \leq t < j$, tel que l'état $P_{q,i,t}$ de l'Entrée/Sortie $es_{i,t}$ du $t^{ème}$ message entrant $Es_t$ est un état destiné à être maintenu durant une période $T_i$ ;
- une somme de contrôle $\sum sesm_{i,j}$ de signatures $Sesm_i$, chaque signature $Sesm_{i,j}$ étant destinée à coder l'Entrée/Sortie $esm_{i,j}$ en fonction de l'état de l'Entrée/Sortie $es_{i,j}$;
- et ladite date $d_j$;

la méthode de filtrage de maintien selon l'invention est **caractérisée en ce qu'**elle comprend:

- un calcul de chaque somme de contrôle $\sum sesm_{i,j}$ du message sortant $Esm_j$ par ajout d'au moins une compensation à ladite somme de contrôle $\sum\mathbf{Ses_{i,j}}$, ladite compensation étant calculée en fonction d'un état courant d'un générateur pseudo aléatoire et d'une donnée issue d'une table de compensation de sorte que la somme de contrôle $\sum\mathbf{sesm_{i,j}}$ caractérisant le message sortant soit cohérente avec les états des Entrées/Sorties $\mathbf{esm_{i,j}}$ dudit message sortant, ladite donnée étant prédéfinie en fonction d'un état courant du générateur pseudo aléatoire, de l'Entrée/Sortie $\mathbf{es_{i,j}}$, de l'état de l'Entrée/Sortie $\mathbf{es_{i,j}}$ et de la signature de contrôle $\mathbf{Ses_{i,j}}$.

2. Méthode de filtrage de maintien selon la revendication 1, **caractérisée par** un couplage dudit générateur pseudo aléatoire avec un dispositif d'extraction de date capable d'extraire au moins une signature d'une somme de contrôle.

3. Méthode de filtrage de maintien selon la revendication 1 ou 2, **caractérisée par** un découpage de ladite somme de contrôle $\sum\mathbf{sesm_{i,j}}$ en c champs, c étant supérieur ou égal à 2.

4. Méthode de filtrage de maintien selon une des revendications 1 à 3, **caractérisée en ce qu'**elle comprend, avant réception d'un premier message entrant $\mathbf{Es_1}$, une initialisation d'au moins un générateur pseudo aléatoire destinée à générer au moyen dudit générateur pseudo aléatoire une valeur d'initialisation capable de traiter uniquement un état d'une Entrée/Sortie destiné à ne pas être maintenu.

5. Méthode de filtrage de maintien selon une des revendications 1 à 4, **caractérisée en ce que** à partir du premier message entrant $\mathbf{Es_1}$ et pour chaque message entrant $\mathbf{Es_j}$ consécutif:

a. si l'Entrée/Sortie $\mathbf{es_{i,j}}$ est dans un état destiné à ne pas être maintenu, la méthode de filtrage de maintien comprend un parcours d'un cycle LSFR court par ledit générateur pseudo aléatoire associé à ladite Entrée/Sortie $\mathbf{es_{i,j}}$;

b. si l'Entrée/Sortie $\mathbf{es_{i,j}}$ est dans un état destiné à être maintenu, la méthode de filtrage de maintien comprend un parcours d'un cycle LSFR long par ledit générateur pseudo aléatoire associé à ladite Entrée/Sortie $\mathbf{es_{i,j}}$.

6. Méthode de filtrage de maintien selon la revendication 5, **caractérisée en ce que** ledit parcours dudit cycle LSFR court et ledit parcours dudit cycle LSFR long comprennent chacun, une addition, successivement pour chaque champ de la somme de contrôle $\sum\mathbf{Ses_{i,j}}$, dudit champ de la somme de contrôle $\sum\mathbf{Ses_{i,j}}$ avec une valeur caractérisant l'état courant dudit générateur pseudo aléatoire et avec ladite donnée provenant de ladite table de compensation.

7. Méthode de filtrage de maintien selon une des revendications précédentes, **caractérisée en ce que** ladite donnée provenant de ladite table de compensation est pré-dédéfinie en fonction d'un état courant du générateur pseudo aléatoire, de l'Entrée/Sortie $\mathbf{es_{i,j}}$, de l'état de l'Entrée/Sortie $\mathbf{es_{i,j}}$ et de la somme de contrôle $\sum\mathbf{Ses_{i,j}}$ afin de permettre soit une génération d'une signature de contrôle $\mathbf{Sesm_{i,j}}$ caractérisant un maintien de l'état d'une Entrée/Sortie durant une période $T_i$, soit une génération d'une signature de contrôle $\mathbf{Sesm_{i,j}}$ caractérisant une confirmation de l'état d'une Entrée/Sortie d'un message entrant.

8. Méthode de filtrage de maintien selon une des revendications précédentes, **caractérisé en ce qu'**elle comprend une vérification de l'incrément de date entre deux messages consécutifs.

9. Dispositif de filtrage de maintien en sécurité d'au moins une Entrée/Sortie $\mathbf{es_{i,j}}$ à au moins un état destiné à traiter un flux de m messages entrants $\mathbf{Es_j}$ réalisant la méthode de la revendication 1.

10. Dispositif de filtrage de maintien selon revendication 9, **caractérisé en ce que** ledit dispositif de calcul, chaque générateur pseudo aléatoire et chaque table de compensation sont couplés les uns avec les autres afin de générer ladite compensation.

11. Dispositif de filtrage de maintien selon une des revendications 9 ou 10, **caractérisé en ce que** ledit dispositif de calcul comprend au moins un algorithme câblé.

12. Dispositif de filtrage de maintien selon une des revendications 9 à 11, **caractérisé en ce qu'**il comprend un dispositif d'extraction de date accouplable audit générateur pseudo aléatoire.

13. Dispositif de filtrage de maintien selon une des revendications 9 à 12, **caractérisé en ce que** ladite table de compensation comprend des données prédéterminées, chaque donnée étant en particulier prédéfinie en fonction d'un état courant du générateur pseudo aléatoire, de l'Entrée/Sortie $\mathbf{es_{i,j}}$, de l'état de l'Entrée/Sortie $\mathbf{es_{i,j}}$ et de la signature de contrôle $\mathbf{Ses_{i,j}}$ afin de permettre soit une génération d'une signature de contrôle $\mathbf{Sesm_{i,j}}$ caractérisant un maintien de l'état d'une Entrée/Sortie durant ladite période $T_i$, soit une génération d'une signature de contrôle **Sesm$_{i,j}$** caractérisant une confirmation de l'état d'une Entrée/Sortie d'un message entrant.

14. Dispositif de filtrage de maintien selon une des revendications 9 à 13, **caractérisé en ce qu'**il comprend au moins un additionneur.

15. Dispositif de filtrage de maintien selon une des revendications 9 à 14, **caractérisé en ce qu'**il comprend un dispositif d'extraction de date capable d'extraire la date d'au moins une somme de contrôle, d'un message entrant ou d'un message sortant, et de déterminer un incrément de date entre deux messages successifs traités par ledit dispositif de filtrage de maintien.

**Patentansprüche**

1. Verfahren zur sicheren Aufrechterhaltungsfilterung von mindestens einem Eingang/Ausgang **es$_{i,j}$** in mindestens einem Zustand eines Flusses von m aufeinanderfolgenden eingehenden Meldungen **Es$_j$,** wobei jede eingehende Meldung **Es$_j$** Folgendes umfasst:

- einen Satz von $n_j$ der Eingänge/Ausgänge **es$_{i,j}$** ($i = 1, ..., n_j$), von denen jeder durch $s_i$ Zustände $P_{q,i,j}$ charakterisierbar ist, wobei jeder Zustand $P_{q,i,j}$ einem Wert $v_{q,i,j}$ zugeordnet ist, dem der Eingang/Ausgang **es$_{i,j}$** gleicht, wenn dieser sich im Zustand $P_{q,i,j}$ befindet;
- eine Prüfsumme $\Sigma$**Ses$_{i,j}$** von Signaturen **Ses$_{i,j}$**, wobei jede Signatur **Ses$_{i,j}$** dazu vorgesehen ist, den Eingang/Ausgang **es$_{i,j}$** zu codieren;
- und ein Datum $d_j$, das zum Datieren der Prüfsumme dient, wobei das Datum bei jeder eingehenden Meldung um ein Datumsinkrement erhöht wird;

wobei das Aufrechterhaltungsfilterverfahren dazu fähig ist, aus jeder eingehenden Meldung **Es$_j$** eine ausgehende Meldung **Esm$_j$** so zu erzeugen, dass die ausgehend von der eingehenden Meldung **Es$_j$** erzeugte ausgehende Meldung **Esm$_j$** Folgendes umfasst:

- einen Satz von $n_j$ Eingängen/Ausgängen **esm$_{i,j}$,** von denen jeder durch die $s_i$ Zustände $P_{q,i,j}$ charakterisierbar ist, wobei der Wert $v_{q,i,j}$ des Eingangs/Ausgangs **esm$_{i,j}$** der ausgehenden Meldung **Esm$_j$** gleich dem Wert $v_{q,i,j}$ des Eingangs/Ausgangs **es$_{i,j}$** der eingehenden Meldung **Es$_j$** in Abhängigkeit von einer möglichen Aufrechterhaltung des Zustands $P_{q,i,j}$ des Eingangs/Ausgangs **es$_{i,j}$** oder davon verschieden sein kann, der Wert $v_{q,i,j}$ des Eingangs/Ausgangs **esm$_{i,j}$** der ausgehenden Meldung **Esm$_j$** genau dann gleich einem Wert $v_{q,t}$ eines Eingangs/Ausgangs **esm$_{i,t}$** einer ausgehenden Meldung **Esm$_t$** unabhängig vom Zustand $P_{q,i,j}$ des Eingangs/Ausgangs **es$_{i,j}$** der eingehenden Meldung **Es$_j$** ist, wenn eine t. eingehende Meldung **Es$_t$**, $j-T_i \leq t < j$ derart existiert, dass es sich beim Zustand $P_{q,i,t}$ des Eingangs/Ausgangs **es$_{i,t}$** der t. eingehenden Meldung **Es$_t$** um einen Zustand handelt, dessen Aufrechterhaltung während eines Zeitraums $T_i$ vorgesehen ist;
- eine Prüfsumme $\Sigma$**Sesm$_{i,j}$** der Signaturen **Sesm$_i$,** wobei jede Signatur **Sesm$_{i,j}$** dazu vorgesehen ist, den Eingang/Ausgang **esm$_{i,j}$** in Abhängigkeit vom Zustand des Eingangs/Ausgangs **es$_{i,j}$** zu codieren;
- und das Datum $d_j$;

wobei das erfindungsgemäße Aufrechterhaltungsfilterverfahren **dadurch gekennzeichnet ist, dass** es Folgendes umfasst:

- eine Berechnung einer jeden Prüfsumme $\Sigma$**Sesm$_{i,j}$** der ausgehenden Meldung **Esm$_j$** durch das Hinzufügen mindestens einer Kompensation der Prüfsumme $\Sigma$**Ses$_{i,j}$,** wobei die Kompensation in Abhängigkeit eines aktuellen Zustands eines Pseudo-Zufallsgenerators und eines von einer Kompensationstabelle stammenden Datenelements so berechnet wird, dass die die ausgehende Meldung charakterisierende Prüfsumme $\Sigma$**Sesm$_{i,j}$** mit den Zuständen der Eingänge/Ausgänge **esm$_{i,j}$** der ausgehenden Meldung kohärent ist, wobei das Datenelement in Abhängigkeit eines aktuellen Zustands des Pseudo-Zufallsgenerators, des Eingangs/Ausgangs **es$_{i,j}$,** des Zustands des Eingangs/Ausgangs **es$_{i,j}$** und der Prüfsignatur **Ses$_{i,j}$** vordefiniert ist.

2. Aufrechterhaltungsfilterverfahren nach Anspruch 1, **gekennzeichnet durch** eine Kopplung des Pseudo-Zufallsgenerators mit einer Datumsextraktionsvorrichtung, die dazu fähig ist, mindestens eine Signatur einer Prüfsumme zu extrahieren.

3. Aufrechterhaltungsfilterverfahren nach Anspruch 1 oder 2, **gekennzeichnet durch** ein Aufteilen der Prüfsumme $\sum\mathbf{Sesm_{i,j}}$ in c Felder, wobei c größer als oder gleich 2 ist.

4. Aufrechterhaltungsfilterverfahren nach einem der Ansprüche 1 bis 3, **dadurch gekennzeichnet, dass** es vor dem Empfang einer ersten eingehenden Meldung $\mathbf{Es_1}$ eine Initialisierung mindestens eines Pseudo-Zufallsgenerators umfasst, um mittels des Pseudo-Zufallsgenerators einen Initialisierungswert zu erzeugen, der dazu fähig ist, nur einen Zustand eines Eingangs/Ausgangs zu behandeln, dessen Aufrechterhaltung nicht vorgesehen ist.

5. Aufrechterhaltungsfilterverfahren nach einem der Ansprüche 1 bis 4, **dadurch gekennzeichnet, dass** ausgehend von der ersten eingehenden Meldung $\mathbf{Es_1}$ und für jede nachfolgende eingehende Meldung $\mathbf{Es_j}$:

    a. wenn der Eingang/Ausgang $\mathbf{es_{i,j}}$ sich in einem Zustand befindet, dessen Aufrechterhaltung nicht vorgesehen ist, das Aufrechterhaltungsfilterverfahren einen Lauf eines kurzen LSFR-Zyklus durch den dem Eingang/Ausgang $\mathbf{es_{i,j}}$ zugeordneten Pseudo-Zufallsgenerator umfasst;

    b. wenn der Eingang/Ausgang $\mathbf{es_{i,j}}$ sich in einem Zustand befindet, dessen Aufrechterhaltung vorgesehen ist, das Aufrechterhaltungsfilterverfahren einen Lauf eines langen LSFR-Zyklus durch den dem Eingang/Ausgang $\mathbf{es_{i,j}}$ zugeordneten Pseudo-Zufallsgenerator umfasst.

6. Aufrechterhaltungsfilterverfahren nach Anspruch 5, **dadurch gekennzeichnet, dass** der Lauf des kurzen LSFR-Zyklus und der Lauf des langen LSFR-Zyklus jeweils eine nacheinander für jedes Feld der Prüfsumme $\sum\mathbf{Ses_{i,j}}$ erfolgende Addition des Feldes der Prüfsumme $\sum\mathbf{Ses_{i,j}}$ zu einem Wert, der den aktuellen Zustand des Pseudo-Zufallsgenerators kennzeichnet, und zu dem von der Kompensationstabelle stammenden Datenelement umfassen.

7. Aufrechterhaltungsfilterverfahren nach einem der vorhergehenden Ansprüche, **dadurch gekennzeichnet, dass** das aus der Kompensationstabelle stammende Datenelement in Abhängigkeit von einem aktuellen Zustand des Pseudo-Zufallsgenerators, des Eingangs/Ausgangs $\mathbf{es_{i,j}}$, des Zustands des Eingangs/Ausgangs $\mathbf{es_{i,j}}$ und der Prüfsumme $\sum\mathbf{Ses_{i,j}}$ vordefiniert ist, um entweder die Erzeugung einer Prüfsignatur $\mathbf{Sesm_{i,j}}$, die eine Aufrechterhaltung des Zustands eines Eingangs/Ausgangs während eines Zeitraums $T_i$ kennzeichnet, oder die Erzeugung einer Prüfsignatur $\mathbf{Sesm_{i,j}}$, die eine Bestätigung des Zustands eines Eingangs/Ausgangs einer eingehenden Meldung kennzeichnet, zu ermöglichen.

8. Aufrechterhaltungsfilterverfahren nach einem der vorhergehenden Ansprüche, **dadurch gekennzeichnet, dass** es eine Verifizierung des Datumsinkrements zwischen zwei aufeinanderfolgenden Meldungen umfasst.

9. Vorrichtung zur sicheren Aufrechterhaltungsfilterung von mindestens einem Eingang/Ausgang $\mathbf{es_{i,j}}$ in mindestens einem Zustand, die zum Behandeln eines Flusses von m eingehenden Meldungen $\mathbf{Es_j}$ vorgesehen ist, wobei das Verfahren von Anspruch 1 ausgeführt wird.

10. Aufrechterhaltungsfiltervorrichtung nach Anspruch 9, **dadurch gekennzeichnet, dass** die Rechenvorrichtung, jeder Pseudo-Zufallsgenerator und jede Kompensationstabelle miteinander gekoppelt sind, um die Kompensation zu erzeugen.

11. Aufrechterhaltungsfiltervorrichtung nach einem der Ansprüche 9 oder 10, **dadurch gekennzeichnet, dass** die Rechenvorrichtung mindestens einen festverdrahteten Algorithmus umfasst.

12. Aufrechterhaltungsfiltervorrichtung nach einem der Ansprüche 9 bis 11, **dadurch gekennzeichnet, dass** sie eine Datumsextraktionsvorrichtung umfasst, die mit dem Pseudo-Zufallsgenerator koppelbar ist.

13. Aufrechterhaltungsfiltervorrichtung nach einem der Ansprüche 9 bis 12, **dadurch gekennzeichnet, dass** die Kompensationstabelle vorbestimmte Datenelemente umfasst, wobei jedes Datenelement insbesondere in Abhängigkeit von einem aktuellen Zustand des Pseudo-Zufallsgenerators, des Eingangs/Ausgangs $\mathbf{es_{i,j}}$, des Zustands des Eingangs/Ausgangs $\mathbf{es_{i,j}}$ und der Prüfsignatur $\mathbf{Ses_{i,j}}$ vordefiniert ist, um entweder die Erzeugung einer Prüfsignatur $\mathbf{Sesm_{i,j}}$, die eine Aufrechterhaltung des Zustands eines Eingangs/Ausgangs während des Zeitraums $T_i$ kennzeichnet, oder die Erzeugung einer Prüfsignatur $\mathbf{Sesm_{i,j}}$, die eine Bestätigung des Zustands eines Eingangs/Ausgangs einer eingehenden Meldung kennzeichnet, zu ermöglichen.

14. Aufrechterhaltungsfiltervorrichtung nach einem der Ansprüche 9 bis 13, **dadurch gekennzeichnet, dass** sie mindestens einen Addierer umfasst.

**15.** Aufrechterhaltungsfiltervorrichtung nach einem der Ansprüche 9 bis 14, **dadurch gekennzeichnet, dass** sie eine Datumsextraktionsvorrichtung umfasst, die dazu fähig ist, das Datum mindestens einer Prüfsumme, einer eingehenden Meldung oder einer ausgehenden Meldung zu extrahieren und ein Inkrement des Datums zwischen zwei von der Aufrechterhaltungsfiltervorrichtung behandelten aufeinanderfolgenden Meldungen zu bestimmen.

**Claims**

**1.** Method for safe maintenance filtering of at least one Input/Output $es_{i,j}$ in at least one state on a flow of m successive incoming messages $Es_j$, each incoming message $Es_j$ comprising:

- a set of $n_j$ of said Inputs/Outputs $es_{i,j}$ (i = 1,...,$n_j$), each of which can be **characterised by** $s_i$ states $P_{q,i,j}$, each state $P_{q,i,j}$ being associated with a value $v_{q,i,j}$ to which said Input/Output $es_{i,j}$ is equal when it is in said state $P_{q,i,j}$;
- a checksum $\Sigma Sesi,j$ of signatures Sesi,j, each signature Sesi,j being intended to code said Input/Output esi,j;
- and a date dj to date the checksum, said date being incremented by a date increment at each incoming message;

said maintenance filtering method being capable of generating from each incoming message $Es_j$ an outgoing message $Esm_j$, such that the outgoing message $Esm_j$ generated from the incoming message $Es_j$ comprises:

- a set of $n_j$ Inputs/Outputs $esm_{i,j}$, each of which can be **characterised by** said $s_i$ states $P_{q,i,j}$, the value $v_{q,i,j}$ of the Input/Output $esm_{i,j}$ of the outgoing message $Esm_j$ being able to be equal to or different from the value $v_{q,i,j}$ of the Input/Output $es_{i,j}$ of the incoming message $Es_j$ as a function of possible maintenance of the state $P_{q,i,j}$ of the Input/Output $es_{i,j}$, the value $v_{q,i,j}$ of the Input/Output $esm_{i,j}$ of the outgoing message $Esm_j$ being equal to a value vq,i,t of an Input/Output esmi,t of an outgoing message Esmt whatever the state Pq,i,j of the Input/Output esi,j of the incoming message Esj if and only if there exists a tth incoming message Est,j-Ti ≤ t < j, such that the state Pq,i,j of the Input/Output esi,t of the tth incoming message Est is a state intended to be maintained for a period Ti;
- a checksum $\Sigma Sesmi,j$ of signatures Sesmi, each signature Sesmi,j being intended to code the Input/Output esmi,j as a function of the state of the Input/Output esi,j;
- and said date dj;

the maintenance filtering method according to the invention is **characterised in that** it comprises:

- a calculation of each checksum $\Sigma Sesmi,j$ of the outgoing message Esmj by adding at least one compensation to said checksum $\Sigma Sesi,j$, said compensation being calculated as a function of a current state of a pseudo-random generator and an item taken from a compensation table such that the checksum $\Sigma Sesmi,j$ characterising the outgoing message is coherent with the states of the Inputs/Outputs esmi,j of said outgoing message, said item being predefined as a function of a current state of the pseudo-random generator, of the Input/Output esi,j, of the state of the Input/Output $es_{i,j}$ and of the check signature $Ses_{i,j}$.

**2.** Maintenance filtering method according to claim 1, **characterised by** coupling of said pseudo-random generator with a date extraction device capable of extracting at least one signature of a checksum.

**3.** Maintenance filtering method according to claim 1 or 2, **characterised by** splitting of said checksum $\Sigma \mathbf{Sesm_{i,j}}$ into c fields, c being greater than or equal to 2.

**4.** Maintenance filtering method according to one of claims 1 to 3, **characterised in that** it comprises, prior to receipt of a first incoming message $Es_1$, an initialisation of at least one pseudo-random generator intended to generate by means of said pseudo-random generator an initialisation value capable of processing solely one state of an Input/Output intended not to be maintained.

**5.** Maintenance filtering method according to one of claims 1 to 4, **characterised in that**, from the first incoming message $Es_1$ and for each consecutive incoming message $Es_j$:

a. if the Input/Output $es_{i,j}$ is in a state intended not to be maintained, the maintenance filtering method comprises a short LSFR cycle run by said pseudo-random generator associated with said Input/Output $es_{i,j}$;
b. if the Input/Output $es_{i,j}$ is in a state intended to be maintained, the maintenance filtering method comprises a long LSFR cycle run by said pseudo-random generator associated with said Input/Output $es_{i,j}$.

6. Maintenance filtering method according to claim 5, **characterised in that** said run of said short LSFR cycle and said run of said long LSFR cycle each comprise an addition, successively for each field of the checksum $\sum \mathbf{Ses_{i,j}}$, of said field of the checksum $\sum \mathbf{Ses_{i,j}}$ to a value characterising the current state of said pseudo-random generator and to said item originating from said compensation table.

7. Maintenance filtering method according to one of the preceding claims, **characterised in that** said item originating from said compensation table is predefined as a function of a current state of the pseudo-random generator, of the Input/Output $\mathbf{es_{i,j}}$, of the state of the Input/Output $\mathbf{es_{i,j}}$ and of the checksum $\sum \mathbf{Ses_{i,j}}$ in order to provide for either a generation of a check signature $\mathbf{Sesm_{i,j}}$ characterising a maintenance of the state of an Input/Output for a period $T_i$, or a generation of a check signature $\mathbf{Sesm_{i,j}}$ characterising a confirmation of the state of an Input/Output of an incoming message.

8. Maintenance filtering method according to one of the preceding claims, **characterised in that** it comprises a verification of the date increment between two consecutive messages.

9. Device for safe maintenance filtering of at least one Input/Output $\mathbf{es_{i,j}}$ in at least one state intended to process a flow of m incoming messages $\mathbf{Es_j}$ implementing the method of claim 1.

10. Maintenance filtering device according to claim 9, **characterised in that** said calculation device, each pseudo-random generator and each compensation table are coupled with one another in order to generate said compensation.

11. Maintenance filtering device according to one of claims 9 or 10, **characterised in that** said calculation device comprises at least one hardwired algorithm.

12. Maintenance filtering device according to one of claims 9 to 11, **characterised in that** it comprises a date extraction device which can be coupled to said pseudo-random generator.

13. Maintenance filtering device according to one of claims 9 to 12, **characterised in that** said compensation table comprises predetermined data, each item being in particular predefined as a function of a current state of the pseudo-random generator, of the Input/Output $\mathbf{es_{i,j}}$, of the state of the Input/Output $\mathbf{es_{i,j}}$ and of the check signature $\mathbf{Ses_{i,j}}$ in order to provide for either a generation of a check signature $\mathbf{Sesm_{i,j}}$ characterising a maintenance of the state of an Input/Output for said period $T_i$, or a generation of a check signature $\mathbf{Sesm_{i,j}}$ characterising a confirmation of the state of an Input/Output of an incoming message.

14. Maintenance filtering device according to one of claims 9 to 13, **characterised in that** it comprises at least one adder.

15. Maintenance filtering device according to one of claims 9 to 14, **characterised in that** it comprises a date extraction device capable of extracting the date of at least one checksum, of an incoming message or of an outgoing message, and of determining a date increment between two successive messages processed by said maintenance filtering device.

FIG 1

FIG 2

FIG 3

**EP 2 686 768 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5125090 A
- GB 2188456 A